# EUROPÄISCHE PATENTSCHRIFT

(11) **EP 0 912 851 B1**
(45) Veröffentlichungstag und Bekanntmachung des Hinweises auf die Patenterteilung: **09.10.2002**
(21) Anmeldenummer: 97937505.2
(22) Anmeldetag: 18.07.1997
(51) Int. Cl.: F16K 27/04, F16K 11/085, F16K 11/07

(54) **HYDRAULIKVENTIL**
HYDRAULIC VALVE
SOUPAPE HYDRAULIQUE

(30) Priorität: 19.07.1996 DE 19629217
(43) Veröffentlichungstag der Anmeldung: 06.05.1999
(73) Patentinhaber: HARTMANN & LÄMMLE GMBH & CO. KG, 71277 Rutesheim (DE)
(72) Erfinder: Schulze, Eckehart, 71277 Rutesheim (DE)
(74) Vertreter: Lutz, Johannes Dieter, Dr.
(86) Internationale Anmeldenummer: EP9703869
(87) Internationale Veröffentlichungsnummer: WO98003811

(56) Entgegenhaltungen:
- EP-A- 0 077 728
- DE-A- 1 932 495
- DE-A- 2 214 273
- DE-A- 2 406 986
- GB-A- 138 235
- GB-A- 2 122 926
- US-A- 3 976 103

## Beschreibung

Die Erfindung betrifft ein Hydraulik-Ventil, bei dem durch Relativ-Bewegungen eines Kolbens zu einem Gehäuse, das in räumlich definierter Konfiguration P- und T-Anschlüsse für den Zu- und Rücklauf von Druckmedium von und zu einem Druckversorgungsaggregat sowie A- und B-Verbraucheranschlüsse hat, über die das Druckmedium vom Druckversorgungsaggregat zum Verbraucher und von diesem zurück zum Ventil strömen kann, definiert verschiedene Funktionsstellungen einstellbar sind, in denen definiert verschiedene Kombinationen von Strömungswegen, freigegeben, abgesperrt oder Unter-Kombinationen solcher Wege jeweils freigegeben und andere abgesperrt sind, wobei miteinander kommunizierende oder gegeneinander abgesperrte Abschnitte solcher Wege durch Nuten des Gehäuses (34) und/oder des Kolbens sowie solche Nuten untereinander und/oder mit Versorgung- oder Verbraucheranschlüssen verbindende Kanäle des Gehäuses und/oder des Kolbens in der Weise gebildet sind, daß das Gehäuse aus planparallelen, plattenförmigen Segmenten zusammengesetzt ist, bei denen Abschnitte von Längskanälen durch Ausnehmungen geschlossen berandeten Querschnitts gebildet sind, die mit entsprechenden Kanalabschnitten des benachbarten Segments in positiver Überlappung stehen oder fluchten, radiale Kanäle oder Abschnitte solcher Kanäle, die mit einem Versorgungsanschluß oder einem Verbraucheranschluß in kommunizierender Verbindung stehen, durch radiale Ausbuchtungen zentraler Öffnungen von Gehäusesegmenten gebildet sind und den Querschnitt eines zentralen Gehäusekanals, innerhalb dessen der Ventilkolben druckdicht axial verschiebbar und/oder rotatorisch auslenkbar ist, erweiternde Nuten durch mit dem zentralen Kanal in positiver Querschnittsüberlappung stehende Ausnehmungen größeren Durchmessers der Gehäusesegmente gebildet sind, des weiteren die Segmentplatten durch Hartlöten stoffschlüssig miteinander verbunden sind und die Segmentplatten für den Lötvorgang kraft-formschlüssig und/oder stoffschlüssig zu einem formhaltigen Paket vereinigt sind.

Ein derartiges Hydraulik-Ventil ist durch die deutsche Offenlegungsschrift 1932495 bekannt.

Bei dem bekannten Hydraulik-Ventil wird zur Verlötung der Segmentplatten miteinander zwischen die einander unmittelbar benachbarten Platten jeweils eine dünne Kupferscheibe eingelegt, die beim Hartlöten, das in einem Induktionsofen erfolgt, durch eine Verklammerung in der geeigneten Position gehalten werden.

Der mit der Herstellung der dünnen Kupferscheiben und mit deren Einbettung in den Segmentplattenstapel verknüpfte Aufwand ist erheblich, und eine bedarfsgerechte Zumessung des Lotmaterials ist schwierig.

Es ist auch bekannt und allgemein üblich, Ventilgehäuse als Aluminium- oder Stahl-Gußteile herzustellen, bei denen zumindest die Grundform eines zentral durchgehenden Gehäusekanals, der den Ventilkolben aufnimmt, die Grundform diesen Kanal radial erweiternder Nuten, der Verlauf in solche Nuten mündender Längs- und Querkanäle, die mit Anschlußöffnungen des Ventilgehäuses in kommunizierender Verbindung stehen, sowie der Verlauf von Kanälen, die intern Gehäusenuten miteinander verbinden, ohne direkt mit einem Versorgungs- oder Verbraucher-Anschluß des Ventilgehäuses in kommunizierender Verbindung zu stehen, durch die Form eines Gußkerns vorgegeben wird, der in die äußere Gußform eingesetzt wird, die den Verlauf der Außenflächen des Gehäuses bestimmt, wobei dieser Gußkern nach dem Gießen des Ventilgehäuses zerfallen können und das Kernmaterial, feinkörniger Formsand, auf einfache Weise quantitativ aus dem Gußkörper entfernbar sein muß.

Diese Ausbildung der Ventilgehäuse als Gußteile ist unter Gesichtspunkten möglichst hoher Dichtigkeit (Vermeidung des Erfordernisses einer außenseitigen Verstopfung von gehäuseintern miteinander kommunizierenden Quer- und Längsbohrungen des Gehäuses), der mechanischen Belastbarkeit und auch der einigermaßen rationellen Fertigung durchaus zweckmäßig, jedoch auch mit einer Reihe gravierender Nachteile behaftet:

Die Herstellung der Gußkerne ist, auch wenn sie so organisierbar ist, daß eine rationelle Fertigung zahlreicher Gehäuse in einem einzigen Gießvorgang möglich ist, mit einem hohen technischen Aufwand verknüpft, der kostenträchtig ist.

Die Formen der Gehäuse-Hohlräume, die beim Gießen durch die Kerne ausgefüllt sind, müssen so gestaltet sein, daß das Kern-Material nach dem Gießen zuverlässig entfernbar ist. Hierdurch sind, aus Gründen hinreichender Stabilität der Gußkerne, Mindest-Querschnitte von Gußkern-Partien bedingt, die beispielsweise gehäuseintern zwei Nuten des zentralen Gehäusekanals miteinander verbinden.

Da eine Nachbearbeitung, z.B. mit konventionellen Einstich-Werkzeugen des zentralen Kanals des gegossenen Gehäuses unausweichlich ist, um hinreichend präzise gehäuseseitige Steuerkanten zu erzielen, durch deren positive oder negative Überlappung mit kolbenseitigen Steuerkanten die verschiedenen Funktionsstellungen des Ventils erzielbar sind, müssen die axialen Abstände solcher gehäuseseitiger Steuerkanten in aller Regel wesentlich größer gewählt werden; als es aus strömungstechnischen Gründen erforderlich wäre. Die Baulänge der bekannten Ventile ist daher aus fertigungstechnischen Gründen in der Regel erheblich größer als es aus physikalischen Gründen erforderlich wäre. Entsprechend größer müssen daher bei linearen Schieberventilen die axialen Dimensionen ihrer Kolben sein, womit auch eine entsprechende Vergrößerung ihrer Masse einhergeht.

Aufgabe der Erfindung ist es daher, ein Hydraulikventil der eingangs genannten Art dahingehend zu verbessern, daß es, unbeschadet der funktionellen Eigenschaften und der Präzision der Anordnung und Gestaltung seiner Steuerkanten sowie einer guten Dichtigkeit seines Gehäuses mit wesentlich geringerem Aufwand herstellbar ist und auch mit signifikant kleineren räumlichen Abmessungen realisierbar ist.

Diese Aufgabe wird erfindungsgemäß durch die Merkmale des Patentanspruchs 1 gelöst.

Durch die hiernach vorgesehenen geschlossenen Kammern für das zur mechanisch festen stoffschlüssigen Verbindung der Segmentplatten benötigte Lötmaterial, die durch gruppenweise aneinander anschließende Ausnehmungen der Segmentplatten gebildet sind und sich über die gesamte Spaltfugenfolge der Segmentplatten erstrecken, ist eine sehr genaue Zumessung der Lotmenge zu den jeweils miteinander zu verlötenden Segmentplatten-Flächen möglich.

Die dünnen Hartlotschichten, die durch Kapillarwirkungen zwischen den Blechplatten-Segmenten entstehen ergeben eine absolut dichte und fest Verbindung der Gehäusesegmente untereinander. Die Dichtigkeit und mechanische Belastbarkeit des Gehäuses ist derjenigen eines konventionell gegossenen Gehäuses äquivalent. Es kommt hinzu, daß die bei gegossenen Gehäusen statistisch unvermeidbaren Gußfehler, z.B. Lunkerstellen, nicht auftreten können, so daß erfindungsmäß gestaltete Ventilgehäuse statistisch mit geringerer Ausschlußquote herstellbar sind.

Vorteilhaft kann es auch sein, wenn der Aufnahmeraum für das drahtförmige Lötmaterial als ein zusammenhängender Kanal ausgebildet ist, der sich, mäander- oder spiralförmig verlaufend, durch das Gehäuse erstreckt und beim fertigen Ventil als Durchflußkanal für Kühlflüssigkeit oder -Gas nutzbar ist. Ein solcher Kanal kann bei der für das Gehäuse vorgesehenen Segment-Bauweise ohne Schwierigkeit so geführt werden, daß das Kühlfluid durch die thermisch besonders belasteten Zonen des Ventilgehäuses strömt und daß demgemäß eine wirksame Wärmeabfuhr möglich ist.

Durch die Möglichkeit, in sich geschlossene Hohlräume zu schaffen, was gußtechnisch nicht möglich wäre, kann auch eine Leichtbauweise mit erheblicher Gewichtsersparnis realisiert werden, ohne daß eine Einbuße an Stabilität hinzunehmen wäre. Des weiteren besteht die Möglichkeit, relativ großvolumige Räume durch enge Kanäle miteinander zu verbinden, um z.B. die Wirkung interner Puffer zu erzielen.

Eine Nachbearbeitung des Gehäuses ist im wesentlichen nur in der Weise erforderlich, daß diejenigen kreisrunden, zentralen Öffnungen von Gehäusesegmenten, in denen der Ventilkolben druckdicht gleitfähig drehbar oder axial verschiebbar gelagert ist, auf exakt gleichen Durchmesser und exakt miteinander fluchtende Anordnung gebracht werden. Die für NCund CNC- gesteuerte Bearbeitungsmaschinen übliche Fertigungsgenauigkeit für die einzelnen Platten-Segmente des Gehäuses sowie deren lagerichtige Formfixierung für den Lötvorgang vorausgesetzt, die durch einfache Justage-Hilfen ohne weiteres erreichbar ist, kann die Nachbearbeitung des Gehäuses in aller Regel auf eine Hon-Bearbeitung der zentralen Ausnehmungen der Segmentplatten beschränkt werden, die nicht mit einer Gratbildung an den Steuerkanten verknüpft ist, was fertigungstechnisch ebenfalls von erheblichem Vorteil ist. Das erfindungsgemäße Ventil ist daher insgesamt wesentlich kostengünstiger herstellbar als ein Ventil mit einem in Gußtechnik gefertigten Gehäuse.

Für die Anordnung von Aufnahmekanälen für Lotmaterial, die sich zwischen den Endplatten des Segmentpakets über dessen gesamte Länge erstrecken, oder auch nur über Teillängen desselben, jedoch in positiver Überlappung miteinander stehen, zumindest allenfalls durch ein Segment gegeneinander abgesetzt sein sollten, ist es in jedem Fall zweckmäßig, wenn solche Aufnahmekanäle axialsymmetrisch bezüglich der zentralen Längsachse des zentralen Gehäusekanals angeordnet sind, d. h. in Bereichen, denen jeweils etwa gleiche radiale Abstände von den am weitesten entfernten Flächenbereichen entsprechen, die vom Lot benetzt werden müssen.

Zu der für den Lötvorgang erforderlichen lagerichtigen Vorfixierung der Segmentplatten aneinander vorgesehene Fixierungsstäbe, die sich zwischen den Endsegmenten des Segmentpakets erstrecken und miteinander fluchtende Ausnehmungen der plattenförmigen Segmente durchsetzen, können als an einem der Endsegmente befestigte, stabförmige Zuganker vorgesehen sein, die an der anderen Seite des Pakets mit der dortigen Endstirnplatte vernietet sind, aber auch "lose" Fixierungsstäbe, die mit jeweils beiden Enstirnplatten des Segmentpakets vernietet sind. In jedem Falle ist es zweckmäßig, wenn der Durchmesser der Fixierungsstäbe dem Durchmesser der Ausnehmungen der Gehäusesegmente entspricht, so daß die Fixierungsstäbe auch zur wechselseitigen zentrierten Justage der Semgentplatten benutzbar sind.

Die lagerichtige Vorfixierung der Segmentplatten für den Lötvorgang ist auch in der Weise möglich, daß das Segmentplatten-Paket durch Verstemmen in miteinander fluchtende randoffene Ausnehmungen der plattenförmigen Segmente eingelegter Verankerungskörper mit den plattenförmigen Segmenten kraft-formschlüssig zusammengehalten ist, wobei die randoffenen, miteinander fluchtenden Ausnehmungen zweckmäßigerweise eine Längsnut mit sich nach außen verjüngendem, trapezförmigem lichtem Querschnitt bilden, und die Verankerungskörper als flach gewölbte Stäbe ausgebildet sind, die durch Einpressen in die Nuten die kraft-formschlüssige Verankerung der plattenförmigen Segmente vermitteln.

Eine geeignete formhaltige Fixierung des Segmentpakets des Gehäuses kann auch dadurch erzielt werden, daß die Segmentplatten durch schmale Schweißnähte, die in geeigneter, vorzugsweise axialsymmetrischer Anordnung über die Spaltfugen gelegt werden, miteinander stoffschlüsssig verbunden werden. Voraussetzung hierfür ist, daß die Segmentsplatten während des Verschweißens in ihrer für das fertige Gehäuse charakteristischen Konfiguration zueinander gehalten werden können.

Eine lagerichtige Fixierung der plattenförmigen Segmente aneinander ist, gleichsam selbsttätig, auch dadurch erzielbar, daß einander benachbart angeordnete Segmentplatten mit koaxialen Vorsprüngen und Vertiefungen etwa komplementärer Gestaltung versehen sind und die Segmentplatten durch Eindrücken der Vorsprünge in die Vertiefungen der benachbarten Segmentplatte(n) kraftschlüssig aneinander fixierbar sind.

Diese Art der lagerichtigen Fixierung der Segmentplatten aneinander ist, wenn diese relativ dick ausgebildet sind, herstellungstechnisch auf einfache Weise dadurch möglich, daß die Vorsprünge durch die Butzen von ausgestanzten Vertiefungen gebildet sind, bei denen der Stanzhub nur über einen Teil, vorzugsweise den überwiegenden Teil der Materialdicke der jeweiligen Segmentplatten geführt ist.

Wenn die Dicke solcher plattenförmiger Segmente des Gehäuses, bei denen der Rand ihrer zentralen Ausnehmungen jeweils den Nutgrund einer den zentralen Kanal des Gehäuses erweiternden Nut bildet, dem axialen Abstand der die Nutwangen bildenden Segmentplatten oder einem natürlichen Bruch dieses Abstandes entspricht und/oder die Dicke von Plattensegmenten, die Nutwangen zweier durch einen Ringflansch gegeneinander abgegrenzter Gehäuse-Ringnuten bilden, der Dicke des jeweiligen Ringflasches oder einem natürlichen Bruch desselben entspricht, so können im Prinzip sämtliche plattenförmige Segmente des Ventilgehäuses dieselbe Dicke haben oder aus Segment-Elementen derselben Dicke zusammengesetzt sein.

In konsequenter Verfolgung des Erfindungsgedankens besteht auch der Ventilkolben aus hart miteinander verlöteten, der Grundform nach kreisscheibenförmigen Segmentplatten, so daß auch die axiale Weite und radiale Tiefe von Nuten des Kolbens und die Dicke solcher Nuten gegeneinander absetzender Kolbenflansche durch die Dicken der Segmentplatten bzw. das Vielfache einer Mindestdicke bestimmt werden können.

Dasselbe gilt sinngemäß für einen in den zentralen Kanal des Gehäuses eingesetzte Zwischenhülse, die den Kolben koaxial umschließt und ihrerseits aus ringscheibenförmigen, hart miteinander verlöteten Segmenten gleichen Innendurchmessers dᵢ besteht.

Eine solche Zwischenhülse kann in alternativen Gestaltungen des Ventils fest mit dem Gehäuse desselben oder fest mit dem relativ zum Gehäuse beweglichen Ventilkolben verbunden sein und ermöglicht in beiden Fällen auf einfache Weise die Realisierung von Ringkanälen des Gehäuses, bzw. des Kolbens, die die Strömungspfade des Ventils bilden. Die Zwischenhülse kann jedoch auch als relativ zum Gehäuse und einem zentralen, fest mit diesem verbundenen Kolben bewegliches Ventilelement ausgebildet sein, durch denen Verschiebung oder rotatatorische Auslenkung die verschiedenen Funktionsstellungen des Ventils einstellbar sind.

In einer bevorzugten Gestaltung des erfindungsgemäßen Ventils sind sowohl dessen Kolben als auch die Zwischenhülse relativ zum Gehäuse und gegeneinander beweglich ausgebildet.

In dieser Gestaltung kann das Ventil als Nachlauf-Regelventil ausgebildet sein, bei dem entweder der Kolben als Sollwert-Vorgabeelement und die Zwischenhülse als Istwert-Rückmelde-Element oder die Hülse als Sollwert-Vorgabe-Element und der Kolben als Ist-Rückmelde-Element genutzt sind.

Die insoweit erläuterte Gestaltung des Ventilgehäuses, des Kolbens und einer diesen koaxial umgebenden Zwischenhülse ist insbesondere für eine Ausbildung des Ventils als Drehschieberventil geeignet, bei dem es, unbeschadet einer guten Dichtigkeit der Abgrenzung von hohem Druck ausgesetzten Strömungspfaden gegen solche, die auf niedrigem Druckniveau, beispielsweise dem Umgebungsdruck, stehen, auf eine leichtgängige Beweglichkeit der relativ zueinander beweglichen Ventilelemente ankommt.

Weitere Einzelheiten des erfindungsgemäßen Hydraulik-Ventils ergeben sich aus der nachfolgenden Beschreibung von Ausführungsbeispielen desselben anhand der Zeichnung. Es zeigen:
- Fig. 1: ein erfindungsgemäßes Hydraulikventil mit einem aus plattenförmigen Segmenten zusammengesetzten Gehäuse in schematisch vereinfachter perspektivischer Darstellung, teils im Schnitt längs einer seine zentrale Längsachse sowie die Längsachsen von Druck(P) - und Tank(T) - Anschlußkanälen des Ventils enthaltenden vertikalen Längsmittelebene des Gehäuses, teils in Ansicht seiner anschlußseitigen Stirnfläche,
- Fig. 1a: das Ventil gemäß Fig. 1 im Schnitt längs seiner vertikalen Längsmittelebene,
- Fig. 1b: das Ventil gemäß Fig. 1 im Schnitt längs seiner die zentrale Längsachse enthaltenden, rechtwinklig zur vertikalen Längsmittelebene verlaufenden Quermittelebene
- Fig. 1c: das Gehäuse des Ventils gemäß Fig. 1, in einer der Fig. 1a entsprechenden Schnittdarstellung,
- Fig. 1d: eine Ansicht des dem anschlußseitigen Endsegment des Gehäuses benachbarten Gehäusesegments,
- Fig. 2: ein vereinfachtes Hydraulik-Schaltbild zur Erläuterung der Funktion des Ventils gemäß Fig. 1,
- Fig. 3: die plattenförmigen Segmente des Ventilgehäuses sowie ebenfalls als plattenförmige Segmente ausgebildete Elemente des Ventilkolbens und einer den Kolben innerhalb des zentralen Ventilgehäusekanals koaxial umgebenden Hülse in auseinandergezogener, vereinfachter perspektivischer Darstellung, die Kolbenund Hülsensegmente in gegenüber der Darstellung der Gehäusesegmente vergrößertem Maßstab,
- Fig. 3a: einen Teil der Kolben- und Hülsensegmente gemäß Fig.3 in gegenüber dieser weiter vergrößertem Maßstab,
- Fig. 4: ein weiteres Ausführungsbeispiel eines dem Ventil gemäß Fig. 1 bau- und funktionsanalogen Hydraulik-Ventils und
- Fig. 5: ein Nachlauf-Hydraulikventil in einer zu dem Ventil gemäß Fig. 1 bau-analogen Auslieferung

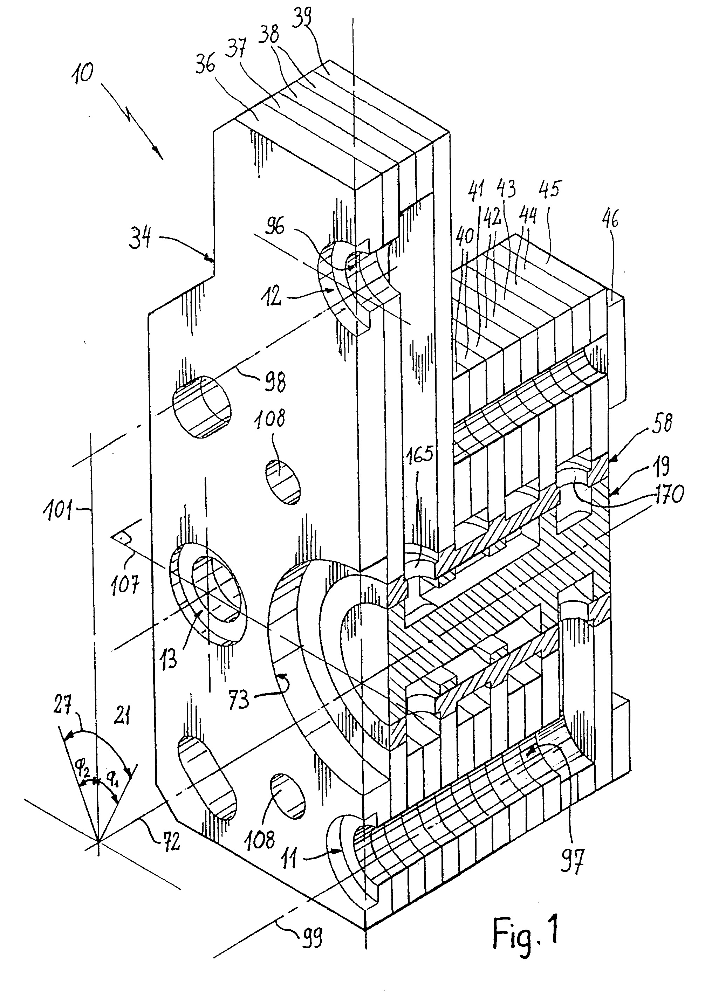

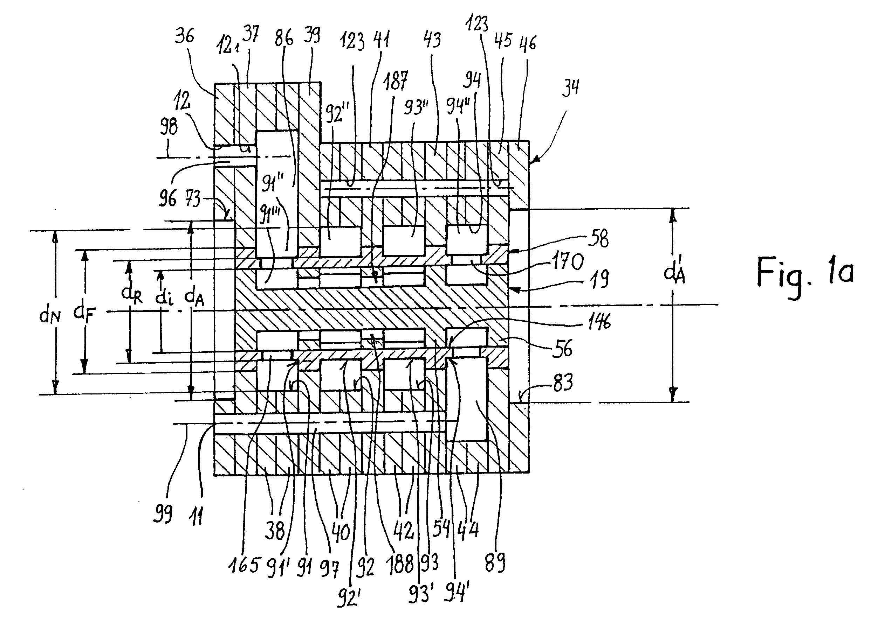

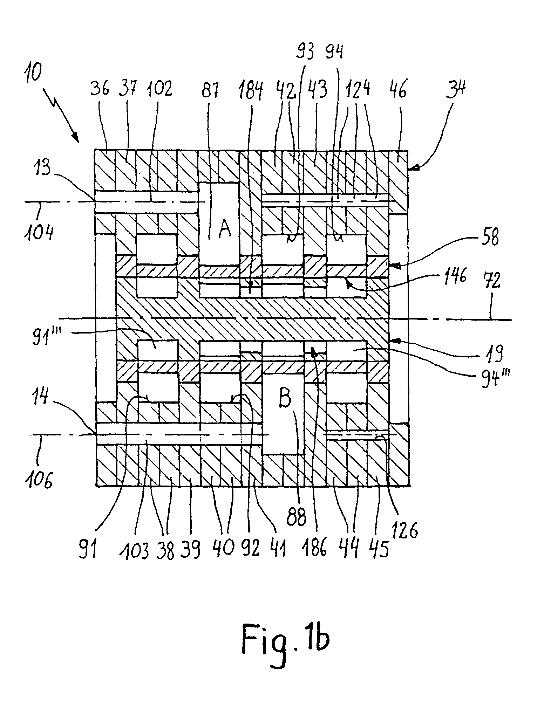

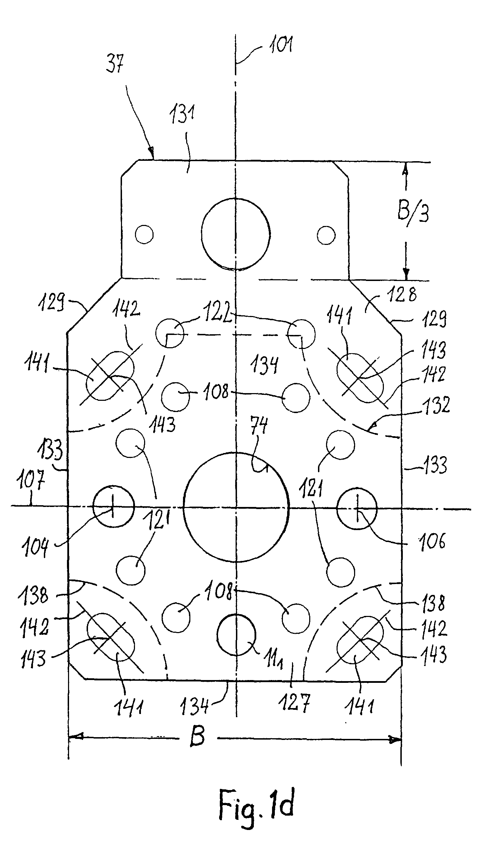

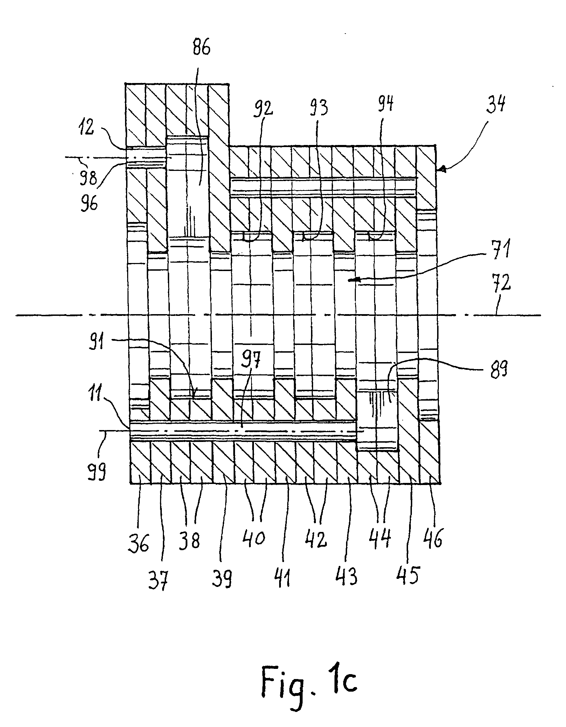

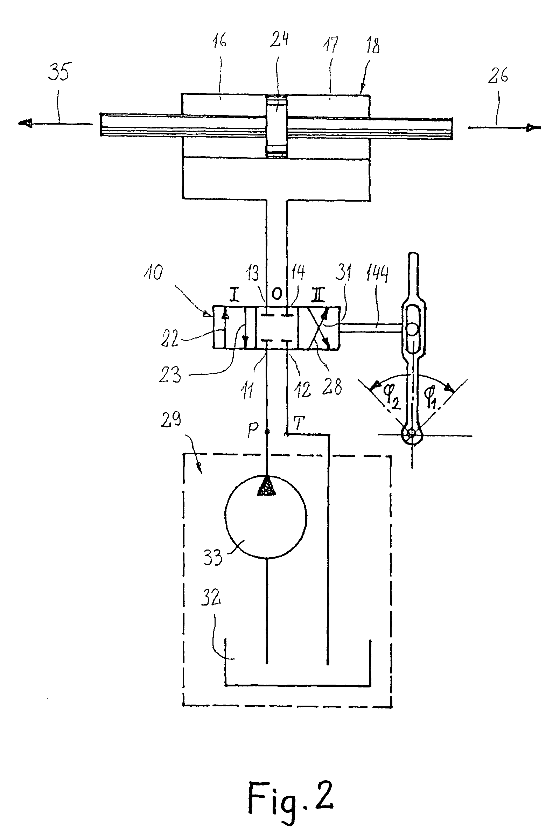

Für das in den Fig. 1 bis 3 insgesamt mit 10 bezeichnete Hydraulikventil sei zum Zweck der Erläuterung - ohne Beschränkung der Allgemeinheit - vorausgesetzt, daß es als Drehschieber-Ventil ausgebildet ist, das die Funktion eines 4/3-Wege-Proportionalventils vermittelt. Es hat eine sperrende Grundstellung 0, in der ein Druck(P)-Versorgungsanschluß 11 sowie ein Rücklauf(T)-Anschluß 12 gegen einen Verbraucher(A)-Anschluß 13 sowie gegen einen weiteren Verbraucher(B)-Anschluß 14 abgesperrt sind, die mit Antriebsdruckräumen 16 und 17 eines in der Fig. 2 als doppelt-wirkender linearer Hydrozylinder 18 dargestellten Verbrauchers verbunden sind.

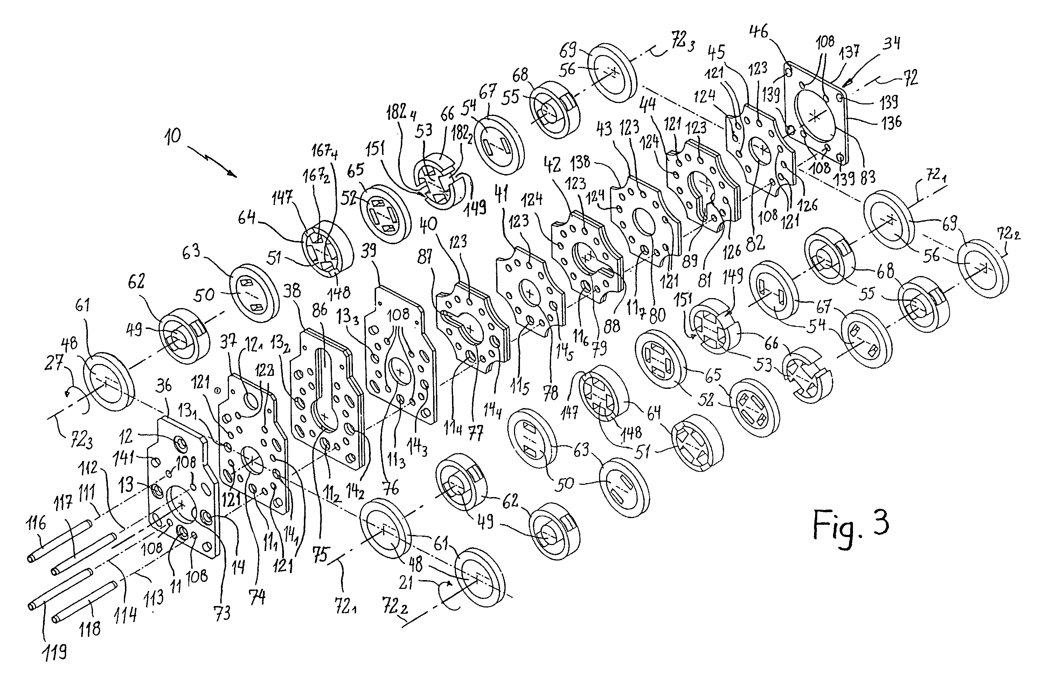

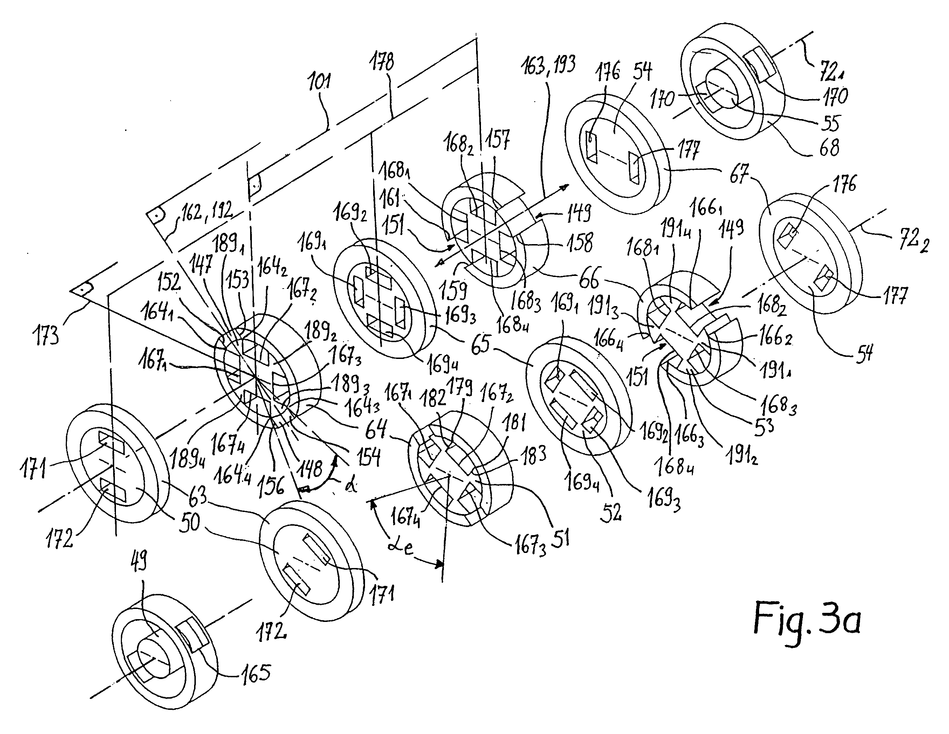

Durch Verdrehen des insgesamt mit 19 bezeichneten Kolbens des Ventils 10 in dem durch den Pfeil 21 der Fig.1 und 3 repräsentierten Uhrzeigersinn um einen azimutalen Betrag ϕ₁ ist das Ventil 10 in seine Funktionsstellung I steuerbar, in der über einen Strömungspfad 22 des Ventils 10 der eine Antriebsdruckraum 16 des Hydrozylinders 18 mit dem P-Versorgungsanschluß 11 des Ventils 10 und der andere Antriebsdruckraum 17 des Hydrozylinders 18 über einen Strömungspfad 23 des Ventils 10 mit dem T-Anschluß 12 des Ventils 10 verbunden sind, so daß sich der Kolben 24 des Hydrozylinders 18 in Richtung des Pfeils 26 der Fig. 2, gemäß der Darstellung nach rechts, bewegt.

Durch Verdrehen des Ventilkolbens 19 in der durch den Pfeil 27 der Fig. 1 repräsentierten azimutalen Richtung ϕ₂, im Gegenuhrzeigersinn, gelangt das Ventil 10 in seine zur Funktionsstellung I gleichsam alternative Funktionsstellung II, in der der andere Antriebsdruckraum 17 des Verbrauchers 18 über einen Strömungspfad 28 des Ventils 10 mit dem P-Versorgungsanschluß 11 verbunden ist, an dem der hohe Ausgangsdruck P des Druckversorgungsaggregats 29 bereitgestellt ist, während der in der Funktionsstellung I des Ventils 10 mit dem P-Versorgungsanschlusses 11 des Ventils 10 verbundene Antriebsdruckraum 16 des Verbrauchers 18 nunmehr über einen Strömungspfad 31 mit dem drucklosen Tank 32 des Druckversorgungsagregats 29 verbunden ist, so daß sich in der Funktionsstellung II des Ventils 10 der Kolben 24 des Verbrauchers 18 in Richtung des Pfeils 35 der Fig. 2, gemäß der Darstellung nach links, bewegt.

Für das Ventil 10 ist die Eigenschaft vorausgesetzt, daß die Hydraulikölströme, die in den Funktionsstellungen I und II über das Ventil zum Verbraucher 18 und von diesem in den Tank 32 des Druckversorgungsaggregats 29 zurückströmen können, umso größer sind, je weiter der Kolben 19 aus seiner fuktionsneutralen Grundstellung 0 azimutal ausgelenkt ist, in der der Verbraucher 18 stillgesetzt ist.

Drehschieberventile, die diese insoweit erläuterten Funktionen vermitteln sowie auch funktionsanaloge lineare Schieberventile sind allgemein bekannt, auch in Ausführungen, in denen z. B. in der Grundstellung des Ventils dessen P-und T-Anschlüsse miteinander verbunden sind, so daß die Pumpe 33 des Druckversorgungsaggregats 27 in einem schonenden Umlaufbetrieb betrieben werden kann.

Im Unterschied zu konventionellen Ventilen der insoweit erläuterten Art ist das ingesamt mit 34 bezeichnete Gehäuse aus plattenförmigen, aus Stahlblech bestehenden Segmenten 36 bis 46 zusammengesetzt, die großflächig durch Hartlöten miteinander verbunden sind.

In einer zu dem Segment-Aufbau des Gehäuses 34 analogen Weise ist der Kolben 19 des Ventils 10 aus der Grundform nach kreisscheibenförmigen Segmenten 48 bis 56 zusammengelötet.

Ein entsprechender Segmentaufbau ist auch für eine insgesamt mit 58 bezeichnete, der Grundform nach rohrförmig-zylindrische Zwischenhülse vorgesehen, die aus der Grundform nach ringförmigen, hart miteinander verlöteten Segmenten 61 bis 69 besteht.

Das Gehäuse 34 des Ventils 10 hat einen zentralen, durchgehenden Gehäusekanal 71 (Fig. 1c) der auf Abschnitten der Länge, die den Dicken der plattenförmigen Gehäusesegmente 36 bis 46 entsprechen durch die Ränder entlang der zentralen Längsachse 72 des zentralen Kanals 71 aufeinanderfolgender und ineinander übergehender zentraler Öffnungen 73 bis 83 der plattenförmigen Gehäusesegmente 36 bis 46 gebildet ist.

Die geschlossen kreisförmig berandeten Öffnungen 73, 74, 76, 78, 80, 82 und 83 der plattenförmigen Gehäusesegemente 36, 37, 39, 41, 43, 45 und 46 und die auf einem überwiegenden azimutalen Bereich kreisbogenförmig berandeten Öffnungen 75, 77, 79 und 81 der übrigen plattenförmigen Gehäusesegmente 38, 40, 42 und 44, deren zentrale Öffnungen mit schlitzförmigen radialen Ausbuchtungen 86, 87 und 88 bzw. 89 versehen sind, sind koaxial bezüglich der zentralen Längsachse 72 des zentralen Gehäusekanals 71 angeordnet.

Durch Ringnut-Segmente 38, 40, 42, und 44, die paarweise zwischen Ringflansch-Segmenten 37, 39, 41, 43 und 45 der plattenförmigen Gehäusesegmente 36 bis 46 angeordnet sind, wobei der Durchmesser d_{F} (Fig. 1a) der zentralen Öffnungen 74, 76, 78, 80 und 82 der Ringflanschsegmente 37, 39,41, 43 und 45 der plattenförmigen Gehäusesegmente etwas kleiner ist als derjenige (d_{N}) der Öffnungen der zwischen jeweils zwei Ringflanschsegmenten angeordneten Ringnut-Segmente 38, 40, 42 und 44 des Gehäuses 34 sind innerhalb des Gehäuses 34 dessen zentralen Kanal abschnittsweise radial erweiternde Ringnuten 91 bis 94 gebildet, nämlich eine T (Versorgungs)-Anschlußnut 91, eine A(Verbraucher)-Anschlußnut 92, eine B(Verbraucher)-Anschlußnut 93 und eine P-(Druckversorgungs)-Anschlußnut 94, wobei die A-Anschlußnut und die B-Anschlußnut 93 zwischen der T-Anschlußnut 91 und der P-Anschlußnut 94 angeordnet sind und hierbei die A-Anschlußnut 92 zwischen der T-Anschlußnut 91 und der B-Anschlußnut 93 angeordnet ist, die der P-Anschlußnut 94 benachbart angeordnet ist.

Das anschlußseitige Ende des Gehäuses 34 ist durch das Anschlußsegment 36 gebildet, an dem in einem für ein 4/3 WegeVentil charakteristischen, standardisierten Bohrungsbild die Anschlußbohrungen für den P-Versorgungsanschluß 11, den T-Anschuß 12, den A-Verbraucheranschluß 13 und den B-Versorgungsanschluß 14 angeordnet sind.

Das dem Anschlußsegment 36 des Gehäuses 34 benachbarte Ringflanschsegment 37 ist mit einer mit der T-Anschlußbohrung 12 des Anschlußsegements 36 fluchtenden kreisrunden Ausnehmung 12₁ verehen, die zusammen mit der Anschlußbohrung 12 einen in die radiale Ausbuchtung 86 der zentralen Öffnung 77 der T-Nutsegmente 38 mündenden T-Längskanal 96 (Fig. 1a) bildet, der über den durch die radiale Ausbuchtung 86 gebildeten Querkanal mit der T-Anschlußnut 91 des Gehäuses 34 in ständig kommuniziernder Verbindung steht.

Die zwischen dem Anschlußsegment 36 und dem P-Ringnutsegment 44 angeordneten Gehäusesegmente 37 bis 43 sind mit mit der P-Anschlußbohrung 11 des Anschlußsegments 36 fluchtenden kreisrunden Ausnehmungen 11₁ bis 11₇ versehen, die einen P-Längskanal 97 bilden, der in den durch die radialen Ausbuchtungen 89 der zentralen Öffnugen 81 der P-Nutsegmente 44 gebildeten Querkanal mündet, so daß ständig kommunizierende Verbindung zwischen dem P-Versorgungsanschluß 11 und der P-Ringnut 94 des Gehäuses 34 besteht. Die zentrale Längsachse 72 des zentralen Kanals 71 des Gehäuses 34 sowie die zentrale Längsachse 98 des T-Längskanals 96 und die zentrale Längsachse 99 des P-Kanals 97 liegen in einer gemeinsamen Ebene 101, die gemäß der Darstellung der Fig. 1 und 1d als "vertikale" Längsmittelebene des Gehäuses 34 bezeichnet sei.

Die zwischen dem Anschlußsegment 36 und den A-Ringnutsegmenten 40 angeordeten Gehäusesegmente 37, 38 und 39 sind mit mit der A-Verbraucheranschlußbohrung 13 des Anschlußsegments 36 fluchtenden kreisrunden Ausnehmungen 13 ₁ und 13 ₂ bzw 13 ₃ versehen, die insgesamt einen A-Längskanal 102 (Fig. 1b) bilden, der in die radiale Ausbuchtug 87 der zentralen Öffnung 77 der A-Ringnutsegmente 40 mündet, wodurch wiederum ständig-kommunizierende Verbindung des A-Verbraucheranschlusses 13 mit der A-Anschlußnut 92 des Gehäuses 34 besteht.

Die zwischen dem Anschlußsegment 36 des Gehäuses 34 und dessen B-Ringnutsegmenten 42 angeordneten Gehäusesegmente 37 bis 41 sind mit kreisrunden, mit der B-Anschlußbohrung 14 des Anschlußsegments 36 fluchtenden Ausnehmungen 14₁, 14₂, 14₃, 14₄ und 14₅ versehen, die einen B-Längskanal 103 bilden, der in den durch die radialen Ausbuchtungen 88 der zentralen Öffnung 79 der B-Ringnutsegmente 42 gebildeten Kanal mündet, der mit der B-Ringnut 93 des Gehäuses 34 in kommunizierender Verbindung steht, so daß auch deren ständig-kommunizierende Verbindung mit dem B-Verbraucheranschluß 14 des Ventils 10 gegeben ist.

Die zentrale Längsachse 104 des A-Längskanals 102 und die zentrale Längsachse 106 des B-Längskanals 103 liegen in der rechtwinklig zur Längsmittelebene 101 des Gehäuses 34 verlaufenden Quermittelebene 107, die die vertikale Längsmittelebene 101 entlang der zentralen Längsachse 72 des Gehäuses 34 schneidet.

Sämtliche Gehäusesegmente 36 bis 46 sind mit jeweils vier kreisrunden Justageausnehmungen 108 versehen, die in derselben, vierzähligen axialsymmetrischen Gruppierung bezüglich der gemeinsamen zentralen Längsachse 72 der zentralen Öffnungen 73 bis 83 der Gehäusesegmente 36 bis 46 und in gleichem radialem Abstand von der zentralen Längsachse 72 angeordnet sind wie die P-Anschlußbohrung 11 und die A-und B-Anschlußbohrungen 13 und 14 und paarweise in Ebenen angeordnet sind, die unter 45° zu den Mittelebenen 101 und 107 des Gehäuses 34 verlaufen.

In der jeweiligen Orientierung der plattenförmigen Gehäusesegmente 36 bis 46, in der deren T-Kanalausnehmungen 12 und 12₁, deren P-Kanalausnehmungen 11 und 11₁ bis 11₇ sowie deren A-Kanalausnehmungen 13 und 13₁ bis 13₃ und deren B-Kanalausnehmungen 14 and 14₁ bis 14₅ jeweils miteinander fluchten, sind auch jeweils elf der Justagebohrungen 108 entlang zentraler Längsachsen 111 bis 114 fluchtend angeordnet, so daß diese Konfiguration der plattenförmigen Gehäusesegmente 36 bis 46 durch Einstecken von zylindrisch-stabförmigen Fixierungs-Stäben 116 bis 119, deren Durchmesser, abgesehen von einem vernachlässigbaren Spiel, gleich demjenigen der Justage-Ausnehmungen 108 ist, formschlüssig fixierbar ist. Durch Vernieten der Enden der Fixierungsstäbe 116 bis 119 mit dem Anschlußsegment 36 und dem betätigungsseitigen Abschluß-Segment 46 des Gehäuses 34 sind dessen plattenförmige Segmente 36 bis 46 insgesamt in der für das Zusammenlöten geeigeten Konfiguration kraft-formschlüssig festlegbar.

Die aximutalen Winkelabstände der zentralen Achsen 111 bis 114 der jeweils miteinander fluchtenden Ausnehmung 108 von der vertikalen Längsmittelebene 101 des Gehäuses 34 betragen beim dargestellten, zur Erläuterung gewählten Ausführungsbeispiel jeweils 30°.

Die zwischen dem Anschlußsegment 36 und dem Abschlußsegment 46 angeordneten, plattenförmigen Gehäusesegmente 37 bis 45 sind des weiteren mit jeweils vier, axial durchgehenden, kreisrunden Ausnehmungen 121 gleichen Durchmessers versehen, deren zentrale Achsen auf demselben "Bohrungs"- Kreis liegen wie die zentralen Längsachsen 111 bis 114 der Justage-Ausnehmungen 108 und von der vertikalen Längsmittelebene 101 des Gehäuses 34 in einem Winkelabstand von jeweils 60 ° angeordnet sind. Diese Ausnehmungen 121 bilden die radialen Berandungen von Aufnahmekanälen für z. B. drahtförmiges Lotmaterial, die sich über die Länge des durch die Gehäusesegmente 37 bis 45 gebildeten Segment-Pakets erstrecken und durch das Anschlußsegment 36 sowie durch das Abschlußsegment 46 des Gehäuses 34 nach außen abgeschlossen sind.

Weitere Lot-Aufnahmekanäle, die in sich geschlossene Bohrräume des Gehäuses 34 bilden, sind durch paarweise miteinander fluchtende axiale, kreisrunde Ausnehmungen 122 der Gehäusesegmente 37 und 38 gebildet, die zwischen dem Anschlußsegment 36 und dem diesen gegenüberliegenden Ringflanschsegment 39 angeordnet sind, das die einseitige axiale Begrenzung der A-Anschlußnut 92 bilden.

Weitere in sich geschlossene Aufnahmeräume für Lot-Material bildende Gehäusekanäle sind durch miteinander fluchtende, kreisrunde Ausnehmungen 123 gleichen Durchmessers der zwischen dem Ringflanschsegment 39 und dem Abschlußsegment 46 angeordneten Gehäusesegmente 40 bis 45 gebildet, wobei diese Ausnehmungen 123 dem P-Längskanal 97 des Gehäuses 34 diametral gegenüberliegend angeordnet sind.

Eine weitere Lotmaterial-Aufnahmekammer, die in sich geschlossen ist, ist durch miteinander fluchtende, kreisrunde Ausnehmungen 124 derjenigen Gehäusesegmente 42 bis 45 begrenzt, die zwischen dem zentralen Ringflanschsegment 41 des Gehäuses 34 und dessen Abschlußsegment 46 angeordnet sind.

Ein weiterer, in sich geschlossener Aufnahmeraum für Lot-Material ist schließlich durch miteinander fluchtende, kreisrunde Ausnehmungen 126 der Ringnutsegmente 44 und des Ringflanschsegments 45 begrenzt, die zwischen dem Abschlußsegment 46 und dem diesen nächstgelegenen Ringflanschsegment 43 des Gehäuses 34 angeordnet und durch diese in axialer Richtung abgeschlossen sind.

Die zentrale Längsachse derjenigen Lot-Aufnahmekammer, die sich zwischen dem zentralen Ringflanschsegment 41 und dem Abschlußsegment 46 des Gehäuses 34 erstreckt, fluchtet mit der zentralen Längsachse 104 des A-Längskanals 102 des Gehäuses 34, während die zentrale Längsachse des kürzeren Lot-Aufnahmeraumes, der sich zwischen dem Abschlußsegment 46 und dem Ringflanschsegment 43 erstreckt, das die P-Nut 94 gegen die B-Ringnut 93 des Gehäuses 34 abgrenzt, mit der zentralen Längsachse 106 des B-Längskanals 103 des Gehäuses 34 fluchtet.

Das Anschlußsegment 36, das diesem benachbarte Ringflanschsegment 37, die auf dieses folgenden T-Ringnutsegmente 38 und das auf diese folgende Ringflanschsegment 39 des Gehäuses 34 haben jeweils dieselbe, im wesentlichen geradlinig begrenzte Außenkontur. Sie haben, wie am besten aus der Detaildarstellung der Fig. 1 d entnehmbar, einen quadratischen Basisbereich 127, der, rechtwinklig zur zentralen Längsmittelebene 101 des Gehäuses 34 gemessen, die Breite B hat, einen an diesen Basisbereich anschließenden, gleichschenklig-trapezförmigen Zwischenbereich 128, dessen Schenkelkanten 129 mit der zentralen Längsmittelebene 101 einen Winkel von 45° einschließen, und einen an den trapezförmigen Zwischenbereich 128 anschließenden, der Grundform nach rechteckigen Kopf-Bereich 131, dessen rechtwinklig zur vertikalen Längsmittelebene 101 des Gehäuses 34 gemessene Breite bei dem zur Erläuterung gewählten Ausführungsbeispiel 2/3 der Breite B des Basisbereiches 127 beträgt und dessen parallel zur vertikalen Längsmittelebene 101 des Gehäuses 34 gemessene Höhe 1/3 der Breite B des Basisbereiches 127 beträgt.

Das Abschlußsegment 46 entspricht hinsichtlich des Verlaufs seiner Außenkontur und seiner Abmessungen dem quadratischen Basis-Bereich 127 des Anschluß-Segments 36 bzw. des diesem benachbarten, in der Fig. 1d dargestellten Ringflansch-Segments 37.

Die Gehäusesegmente 40 bis 45, die zwischen dem Abschlußsegment 46 und dem diesem nächstgelegenen Ringflanschsegment 39 angeordnet sind, dessen Außenkontur derjenigen des Anschluß-Segments 36 entspricht, haben identische, in der Fig. 1d gestrichelt eingezeichnete Außenkonturen 132, die denjenigen eines Balkenkreuzes entsprechen, das sowohl bezüglich der vertikalen Längsmittelebene 101 des Gehäuses 34 als auch bezüglich dessen horizontaler Quermittelebene 107 symmetrisch ausgebildet ist, wobei die geradlinig verlaufenden vertikalen und horizontalen Endstirnkanten 133 und 134 der Balken der kreuzförmigen Gehäusesegmente 40 bis 45 mit den vertikalen und horizontalen Begrenzungskanten 136 bzw. 137 (Fig. 3) des Abschlußsegments 46 fluchten und dieselbe Länge haben, die jeweils der halben Breite B der Basis des Abschlußelements 46 und des Anschlußelements 36 entspricht.

Zwischen den vertikalen und horizontalen Begrenzungskanten 133 und 134 der kreuzförmigen Gehäusesegmente vermitteln jeweils kreisbogenförmig-konkav gekrümmte Übergangsbereiche 138, deren Krümmungsmittelpunkte in den Ecken des quadratischen Basisbereiches 127 liegen.

Das Abschlußsegment 46 ist in der Nähe seiner Ecken mit kreisrunden Durchsteck-Öffnungen 139 für nicht dargestellte Ankerschrauben versehen, mittels derer das Ventil 10 an einem ebenfalls nicht dargestellten Anschlußblock festschraubbar ist. Diese Ankerschrauben treten an den konkavgekrümmten Übergangskanten 138 der kreuzförmigen Gehäusesegmente 40 bis 45 vorbei und durch langloch-förmige Durchsteck-Öffnungen 141 hindurch, die in einer der Anordnung der kreisrunden Durchstecköffnungen 139 des Abschlußsegments 46 entsprechenden Anordnung in unmittelbarer Nähe der Ecken der quadratischen Basisbereiche 127 des Anschlußsegments 36 und der mit diesem konturengleichen Gehäusesegemente 37, 38 und 39 vorgesehen sind, wobei die Längsmittelebenen 142 der langloch-förmigen Durchstecköffnungen jeweils unter 45° zu der Längsmittelebene 101 und zu der Quermittelebene 107 des Gehäuses 34 verlaufen und die zentralen Längsachsen 143 der kreisrunden Durchstecköffnungen 139 des Abschlußsegments 46 enthalten.

Der Durchmesser d_{A} (Fig. 1a) der zentralen Öffnung 73 des Anschlußsegments 36 ist etwas größer als der Durchmesser d_{F} der zentralen Öffnung 74 des benachbarten Gehäusesegments 37. Über die zentrale Öffnung 73 des Anschlußsegments 36 kann aus dem Ventil 10 austretendes Lecköl in einen Lecköl-Kanal des nicht dargestellten Anschlußblocks abfließen. Auch der Durchmesser d_{A}' der kreisrunden zentralen Öffnung 83 des Abschlußsegments 46 ist größer als der Durchmesser d_{F} des benachbarten, kreuzförmigen Gehäusesegements 45 und, beim dargestellten, speziellen Ausführungsbeispiel, auch geringfügig größer als der Durchmesser d_{A} der zentralen Öffnung 73 des Anschlußsegments 36. Durch die zentrale Öffnung 83 des Abschlußsegments 46 kann, wie schematisch in der Fig. 2 dargestellt, ein an dem Kolben 19 angreifendes Betätigungselement 144 hindurchtreten, mittels dessen der Kolben 19, z. B. motor-gesteuert, in den alternativen Drehrichtungen 21 oder 27 um die zentrale Längsachse 72 des Ventils 10 drehbar ist.

Für die weitere Erläuterung des Ventils 10 wird zunächst vorausgesetzt, daß die Zwischenhülse 58 fest in den zentralen Kanal 71 des Gehäuses 34 eingesetzt ist und lediglich der Kolben 19 drehbar, jedoch axial unverschiebbar angeordnet ist.

Die Zwischenhülse 58 ist bei dem zur Erläuterung gewählten Ausführungsbeispiel aus den ringscheibenförmigen Segmenten 61 bis 69 zusammengesetzt, die, in weitestgehender Analogie zum Aufbau des Gehäuses 34 des Ventils 10, in koaxialer Anordnung bezüglich dessen zentraler Längsachse 72 hart miteinander verlötet sind. Die ringscheibenförmigen Segmente 61 bis 69 der Zwischenhülse 58 haben alle denselben Innendurchmesser dᵢ so daß durch die Gesamtheit der Hülsen-Segmente 61 bis 69 ein durchgehender, zentraler, insgesamt bohrungsförmiger Kanal 146 mit kreiszylindrischer innerer Mantelfläche gebildet ist, in dem der Kolben 19, der bei dem zur Erläuterung gewählten Ausführungsbeispiele ebenfalls in einer zur Realisierung der Zwischenhülse 58 analogen Segment-Bauweise hergestellt ist, mit seinen Flansch-Segmenten 48, 50, 52, 54 und 56 druckdicht-gleitfähig und drehbar angeordnet ist.

Die Zwischenhülse 58 umfaßt die in sich geschlossenen Ringflansch-Elemente 61, 63, 65, 67 und 69 des Außendurchmessers d_{F}, sowie die zwischen jeweils zweien der Ringflanschelemente angeordnete Ringnut-Segmente 62, 64, 66 und 68 des kleineren Außendurchmessers d_{R} (Fig 1a). Durch diese ringförmigen Hülsensegmente 61 bis 69 sind radial-äußere Ringnuten 91', 92', 93' und 94' der Zwischenhülse 58 gebildet, die zusammen mit den inneren Ringnuten 91 bis 94 des Gehäuses 34 im wesentlichen geschlossene Ringkanäle 91'' bis 94'' ergeben, nämlich den T-Ringkanal 91'', der mit dem T-Rücklaufanschluß 12 des Ventils in kommunizierender Verbindung steht, den A-Ringkanal 92'', der mit dem A-Verbraucheranschluß 13 des Ventils in kommunizierenden Verbindung steht, den B-Ringkanal 93'', der mit dem B-Verbraucheranschluß 14 des Ventils 10 kommuniziert, sowie den P-Ringkanal 94'', der mit dem Druck(P)-Versorgungsanschluß 11 des Ventils 10 kommunizierend verbunden ist.

Die axialen Dicken der Ringflanschelemente 61, 63, 65, 67 und 69 der Zwischenhülse 58 entsprechen den Dicken der Ringflanschsegmente 37, 39, 41, 43 und 45, in deren zentralen Öffnungen 74, 76, 78 und 80 bzw. 82 die Ringflanschsegmente der Zwischenhülse 58 mit fluchtender Anordnung ihrer Ringstirnflächen mit den großflächigen Begrenzungsseiten der Gehäusesegmente angeordnet sind.

Sinngemäß dieselbe Dickenrelation gilt für die Ringnutsegmente 62, 64, 66 und 68 der Zwischenhülse 58 bezüglich der Dicken der von ihnen axial durchsetzten Ringnutsegmente 38, 40, 42 und 44 des Gehäuses 34.

Die genannte Dickenrelation gilt auch für die Flanschsegmente 48, 50, 52, 54 und 56 sowie die zwischen je zweien dieser Flanschsegmente angeordneten Nut-Segmente 49, 51, 53 und 55 des Kolbens 19 bezüglich der diese Segmente 48 bis 56 koaxial umgebenden ringförmigen Hülsensegmente 61 bis 69 der Zwischenhülse 58, in der der Kolben 19 so angeordnet ist, daß die äußeren Endstirnflächen seiner Endflanschsegmente 48 und 56 fluchtend mit den äußeren Ringstirnflächen der freien Ringflanschsegmente 61 und 69 der Zwischenhülse 58 verlaufen.

Zur weiteren Erläuterung von Details der Zwischenhülse 58 und des Kolbens 19 sei nunmehr auch auf die vergrößerten Segmentdarstellungen der Fig. 3a Bezug genommen.

Die jeweils dem zentralen Ringflanschsegment 65 der Zwischenhülse 58 benachbart angeordneten Ringnutsegmente 64 und 66, welche die radial inneren Begrenzungen des A-Ringkanals 92 '' bzw. des B-Ringkanals 93'' bilden, sind mit jeweils zwei axial und radial durchgehenden Steuerschlitzen 147 und 148 bzw. 149 und 151 versehen, die nach dem Zusammenlöten der ringförmigen Hülsensegmente 61 bis 69 durch Erodieren geschaffen werden. Die Steuerschlitze 147 und 148 des Ringnut-Segments 64, das den A-Ringraum 92'' radial innen begrenzt, und die Steuerschlitze 149 und 151 des die radial innere Begrenzung des B-Ringraums 93'' bildenden Ringraum-Segments 66 der Zwischenhülse 58 sind bezüglich der zentralen Längsachse 72 des Ventils 10 jeweils diametral einander gegenüberliegend angeordnet. Die Längsbegrenzungsflächen 152 und 153 des einen Steuerschlitzes 147 und die Längsbegrenzungsflächen 154 und 156 des anderen Steuerschlitzes 148 des A-Nutsegments 64 der Zwischenhülse 58 verlaufen parallel zueinander sowie parallel zur zentralen Längsachse 72 des Ventils 10, wobei jeweils zwei Längsbegrenzungsflächen 152 und 156 bzw. 153 und 154 miteinander fluchten.

Entsprechend verlaufen auch bei dem B-Ringnutsegment 66 der Zwischenhülse 58 die Längsbegrenzungsflächen 157 und 158 sowie 159 und 161 seiner Steuerschlitze 149 und 151 parallel zueinander und paarweise fluchtend.

Die gemeinsame Längsmittelebene 162 der Steuerschlitze 147 und 148 des A-Nutsegments 64, welche die zentrale Längsachse 72 des Drehschieberventils enthält, verläuft rechtwinklig zu der die zentrale Längsachse 72 enthaltenden gemeinsamen Längsmittelebene 163 der beiden Steuerschlitze 149 und 151 des B-Nutsegments 66 der Zwischenhülse 58.

Die zwischen den radial inneren Längskanten 164₁ und 164₂ des Steuerschlitzes 147 und den radial inneren Längskanten 164₃ sowie 164₄ des Steuerschlitzes 148 des A-Nutsegments 64 sowie die zwischen den radialinneren Längskanten 166₁ und 166₂ des Steuerschlitzes 149 und die zwischen den radial inneren Längskanten 166₃ und 166₄ des Steuerschlitzes 151 des B-Nutsegments 66 der Zwischenhülse 58 gemessene azimutale Weite α der Steuerschlitze 147 und 148 bzw. 149 und 151 beträgt beim dargestellten Ausführungsbeispiel jeweils 90°.

Das A-Nutsegment 64 und das B-Nutsegment 66 der Zwischenhülse 58 sind bei dem dargestellten Ausführungsbeispiel so gegeneinander "verdreht" angeordnet, daß die Längsmittelebenen 162 und 163 der Steuerschlitze 147 und 148 des A-Nutsegments 64 bzw. der Steuerschlitze 149 und 151 des B-Nutsegments 66 mit der vertikalen Längsmittelebene 101 des Gehäuses 34 jeweils einen Winkel von 45° einschließen.

Auch der Kolben 19 des Ventils 10, der in der Zwischenhülse 58 drehbar gelagert ist, wobei seine Flansch-Segmente 48, 50, 52, 54 und 56 flüssigkeitsdicht-gleitfähig an der inneren Mantelfläche der Zwischenhülse 58 anliegen, ist in einer hinsichtlich der axialen Dicke seiner Kolbensegmente 48 bis 56 der axialen Dicke der korrespondierenden Hülsensegmente 61 bis 69 entsprechenden Segment-Bauweise aus seinen ringscheibenförmigen Kolbensegmenten 48 bis 56 gebildet, die wiederum hart miteinander verlötet sind.

Bei dem Kolben 19, zu dessen Erläuterung insbesondere auf die Detaildarstellung der Fig. 3a sowie die Längsschnitt-Darstellungen der Figuren 1a und 1b verwiesen sei, ist durch das anschlußseitige Endflanschsegment 48, das diesem nächstgelegene Trennflanschsegment 50 gleichen Durchmesser dᵢ und das sich zwischen diesen erstreckende T-Nutsegment 49 des Kolbens 19 eine T-Ringnut 91''' gebildet, die über radial durchgehende Querkanäle 165 des T-Ringnutsegments 62 der Zwischenhülse 58 mit dem T-Ringraum 91'' in ständig-kommuizierender Verbindung steht.

Durch das andere, an der Betätigungsseite des Ventils 10 angeordnete Endflanschsegment 56 des Kolbens 19, das diesem nächstgelegene B-Trennflanschsegment 54 gleichen Durchmessers dᵢ und das zwischen diesen angeordnete P-Nutsegment 55 kleineren Außendurchmessers ist eine P-Ringnut 94''' gebildet, die über radiale Querkanäle 170 des T-Ringnutsegments 68 der Zwischenhülse 58 mit dem P-Ringraum 94'' des Ventils 10 in ständig-kommunizierender Verbindung steht.

Zwischen dem A-Trennflanschsegment 50 und dem zentralen Ringflanschsegment 52 gleichen Durchmessers d. des Kolbens 19 ist, innerhalb des A-Ringnutsegments 64 der Zwischenhülse 58 ein A-Steuersegment 51 des Kolbens 19 angeordnet, das mit insgesamt vier, sich zwischen dem A-Trennflanschsegment 50 und dem zentralen Ringflanschsegment 52 erstreckenden, radial außen offenen Längsnuten 167₁ bis 167₄ versehen ist.

Zwischen dem B-Trennflanschsegment 54 und dem zentralen Ringflanschsegment 52 des Kolbens 19, ist innerhalb des B-Ringnutsegments 66 der Zwischenhülse 58 ein B-Steuersegment 53 des Kolbens 14 angeordnet, das wiederum mit insgesamt vier, sich zwischen den B-Trennflanschsegment 54 und dem zentralen Ringflanschsegment 52 des Kolbens 19 erstreckenden, radial außen offenen Längsnuten 168₁ bis 168₄ versehen ist. Die Längsnuten 167₁ bis 167₄ des A-Steuersegments 51 und die Längsnuten 168₁ bis 168₄ des B-Steuersegments 53 sind in vierzähliger Axialsymmetrie bezüglich der zentralen Längsachse 72' des Kolbens 19 angeordnet, wobei die Längsnuten 167₁ bis 167₄ des A-Steuersegments 51 und die Längsnuten 168₁ bis 168₄ des B-Steuersegments 53 des Kolbens 19 paarweise miteinander fluchten. Diese in Längsrichtung paarweise miteinander fluchtenden Längsnuten des A-Steuersegments 51 und des B-Steuersegments 53 sind durch geschlossen rechteckig berandete Durchtrittskanäle 169₁ bis 169₄ des zentralen Ringflanschsegments 52 entsprechend paarweise kommunizierend miteinander verbunden.

Die kolbenfeste gemeinsame Längsmittelebene 173 der einander diametral gegenüberliegenden Längsnuten 167₁ und 167₃ des A-Steuersegments 51, der einander diametral gegenüberliegend angeordneten Durchtrittskanäle 169₁ und 169₃ des zentralen Ringflaschsegments 52 sowie der diametral einander gegenüberliegenden Längsnuten 168₁ und 168₃ des B-Steuersegments 53 ist auch die gemeinsame Längsmittelebene zweier einander diametral gegenüberliegender P-Durchtrittskanäle 176 und 177 des B-Trennflanschsegments 54 des Kolbens 19, über die die jeweils miteinander fluchtenden Längsnuten des A-Steuersegments 51 und des B-Steuersegments 53 sowie die mit diesem kommunizierenden Durchtrittskanäle 169₁ und 169₃ des zentralen Ringflanschsegments 52 mit der P-Ringnut 94''' des Kolbens 19 in ständig kommunizierender Verbindung stehen.

Die zu der erstgenannten kolbenfesten Längsmittelebene 173 rechtwinklig verlaufende, kolbenfeste, gemeinsame Längsmittelebene 178 der jeweils anderen beiden, einander diametral gegenüberliegenden Längsnuten 167₂ und 167₄ des A-Steuersegments 51, der einander diametral gegenüberliegenden angeordneten Durchtrittskanäle 169₂ und 169₄ des zentralen Ringflanschsegments 52 sowie der weiteren einander diametral gegenüberliegenden Längsnuten 168₂ und 168₄ des B-Steuersegments 53 ist auch gemeinsame Längsmittelebene zweier einander diametral gegenüberliegender T-Durchtrittskanäle 171 und 172 des A-Trennflanschsegmets 50 des Kolbens 19, über die die jeweils miteinander fluchtenden Längsnuten 167₂ und 167₄ sowie 168₂ und 168₄ des A-Steuersegments 51 bzw. des B-Steuersegments 53 sowie die mit diesem kommunizierenden Durchtrittskanäle 169₂ und 169₄ des zentralen Ringflanschsegments 52 mit der T-Ringnut 91''' des Kolbens 19 in ständig-kommunizierender Verbindung stehen.

Die effektive azimutale Weite αe der Längsnuten 167₁ bis 167₄ des A-Steuersegments 51 sowie der Längsnuten 168₁ bis 168₄ des B-Steuersegments 53 des Kolbens 19, die durch den Winkelabstand der radial äußeren Längskanten 179 und 181 ihrer parallel zueinander verlaufenden Nutwangenflächen 182 und 183 bestimmt ist, beträgt 90° und ist damit gleich dem azimutalen Abstand α der radial inneren Längskanten 164₁ und 164₂ sowie 164₃ und 164₄ der axialen Steuerschlitze 147 und 148 des A-Ringnutsegments 64 der Zwischenhülse 58 (dieselbe Relation gilt für die Längsnuten 168₁ bis 168₄ des B-Steuersegments 53 des Kolbens 19 und das mit dieser koaxiale Ringnutsegment 66 der Zwischenhülse 58).

Ein an dem P-Versorgungsanschluß 11 des Ventils 10 anstehender Ausgangsdruck P des Druckversorgungsaggregats 29 (Fig. 2) ist über den P-Längskanal 97 (Fig. 1a) des Gehäuses 43 auch in dessen P-Ringkanal 94'' und von diesem über die radialen Querkanäle 170 der Zwischenhülse 58 in die P-Ringnut 94''' des Kolbens 19 sowie in die beiden P-Steuerkanäle 184 und 186 (Fig. 1b) eingekoppelt, die sich, mit den P-Durchtrittskanälen 176 und 177 des B-Trennflanschsegments 54 des Kolbens 19 beginnend bis zu dem A-Trennflanschsegment 50 des Kolbens 19 erstrecken, das die P-Steuerkanäle 184 und 186 gegen die T-Ringnut 91''' des Kolbens 19 absperrt. Des weiteren sind T-Steuerkanäle 187 und 188 (Fig. 1a) die sich, mit den T-Durchtrittskanälen 171 und 172 des A-Trennflanschsegments 50 beginnend, bis zu dem B-Trennflanschsegment 54 des Kolbens 19 erstrecken und durch dieses gegen die P-Ringnut 94''' des Kolbens 19 abgesperrt sind, kommunizierend mit dem Tank 32 des Druckversorgungsaggregats 29 verbunden.

In der Grundstellung 0 des Ventils 10 sind die P-Steuerkanäle 184 und 186 sowie die T-Steuerkanäle 187 und 188 gegen die A-Anschlußnut 92 und die B-Anschlußnut 93 des Gehäuses 34 gesperrt. Diese Sperrfunktion des Ventils 10 in seiner Grundstellung 0 ist dann gegeben, wenn die Steuerschlitze 147 und 148 des A-Ringnutsegments 64 sowie die Steuerschlitze 149 und 151 des B-Ringnutsegments 66 der Zwischenhülse 58 durch je zwei der einander diametral gegenüberliegenden, im Querschnitt sektorförmigen Längsstege 189₁ bis 189₄ und 191₁ bis 191₄ des A-Steuersegments 51 bzw. des B-Steuersegments 53 des Kolbens 19, die deren Längsnuten 167₁ bis 167₄ bzw. 168₁ bis 168₄ azimutal gegeneinander abgrenzen, radial verschlossen sind.

Dies ist bei dem zur Erläuterung gewählten Ausführungsbeispiels 10 für das eine gehäusefeste Anordnung der Zwischenhülse 58 angenommen ist, dann der Fall, wenn die kolbenfesten, jeweils gemeinsamen Längsmittelebenen 192 und 193 der paarweise gegenüber angeordneten sektorförmigen Längsstege 189₁ bis 189₄ des A-Steuersegments 51 bzw. des B-Steuersegments 53 des Kolbens 19 dieselbe Orientierung haben wie die gehäusefesten Längsmittelebenen 162 und 163 der Steuerschlitze 147 und 148 des A-Ringnutsegments 64 bzw. der Steuerschlitze 149 und 151 des B-Ringnutsegments 66 der Zwischenhülse 58, die mit der vertikalen Längsmittelebene 101 des Gehäuses 34 einen Winkel von jeweils 45° einschließen.

Der Grundstellung 0 des Ventils 10 entspricht die entlang der Achse 72₁ der Figuren 3 und 3a auseinandergezogen dargestellte Konfiguration der ringscheibenförmigen Segmente 61 bis 69 seiner Zwischenhülse 58 sowie der kreisscheibenförmigen Segmente 48 bis 56 seines Ventilkolbens 19.

In dieser Grundstellung sind die radial äußeren Längskanten 179 und 181 der Nutwangen-Längsflächen 182 und 183, zwischen denen sich paarweise auch die gekrümmten Ränder der sektorförmigen Längsstege 289₁ bis 189₄ sowie 191₁ bis 191₄ des A-Steuersegments 51 bzw. des B-Steuersegments 53 des Kolbens 19 erstrecken, deckungsgleich mit den radial inneren Längskanten 164₁ bis 164₄ und 166₁ bis 166₄ der Steuerschlitze 147 und 148 des A-Ringnutsegments 64 bzw. der Steuerschlitze 149 und 151 des B-Ringnutsegments 66 angeordnet.

Ausgehend von der Grundstellung 0 des Ventils 10, gelangt dieses durch Drehung seines Kolbens 19 in Richtung des Pfeils 21 der Fig. 3 in die entlang der zentralen Achse 72₂ auseinandergezogen dargestellte Konfigurationen seiner Zwischenhülsen-Segmente 61 bis 69 sowie der Kolbensegmente 48 bis 56, in der durch Überlappung der lichten Querschnitte der Längsnuten 167₁ und 167₃ des A-Steuersegments 51 des Kolbens 19 mit den lichten Querschnitten der Steuerschlitze 147 und 148 des A-Ringnutsegments 64 der A-Verbraucheranschluß 13 des Ventils 10 mit dessen P-Versorgungsanschluß 11 verbunden ist und durch die Überlappung der lichten Querschnitte der Längsnuten 168₂ und 168₄ des B-Steuersegments 53 des Kolbens 19 mit den lichten Querschnitten der Steuerschlitze 149 und 151 des B-Ringsegments 66 der B-Verbraucheranschluß 14 des Ventils 10 mit dessen T-Rücklaufanschluß 12 verbunden ist, d.h. das Ventil 10 die Funktionsstellung I einnimmt.

Alternativ dazu gelangt das Ventil 10, wiederum von seiner Grundstellung 0 ausgehend, durch Drehung seines Kolbens 19 in Richtung des Pfeils 27 der Fig. 3 in die entlang der zentralen Längsachse 72₃ der Fig. 3 auseinandergezogen dargestellte Konfiguration seiner Zwischenhülsensegmente 61 bis 69 sowie der Kolbensegmente 48 bis 56, in der durch die Überlappung der lichten Querschnitte der Längsnuten 167₂ und 167₄ des A-Steuersegments 51 des Kolbens 19 mit den lichten Querschnitten der Steuerschlitze 147 und 148 des A-Ringnutsegments 64 der A-Verbraucheranschluß 13 des Ventils 10 mit dessen T-Rücklaufanschluß 12 verbunden ist und durch die Überlappung der lichten Querschnitte der Längsnuten 168₂ und 168₄ des B-Steuersegments 53 des Kolbens 19 mit den lichten Querschnitten der Steuerschlitze 149 und 151 des B-Ringnutsegments 66 der Zwischenhülse 58 der B-Verbraucheranschluß 14 des Ventils 10 mit dessen P-Versorgungsanschluß 11 verbunden ist, d.h. das Ventil 10 seine Funktionsstellung II einnimmt.

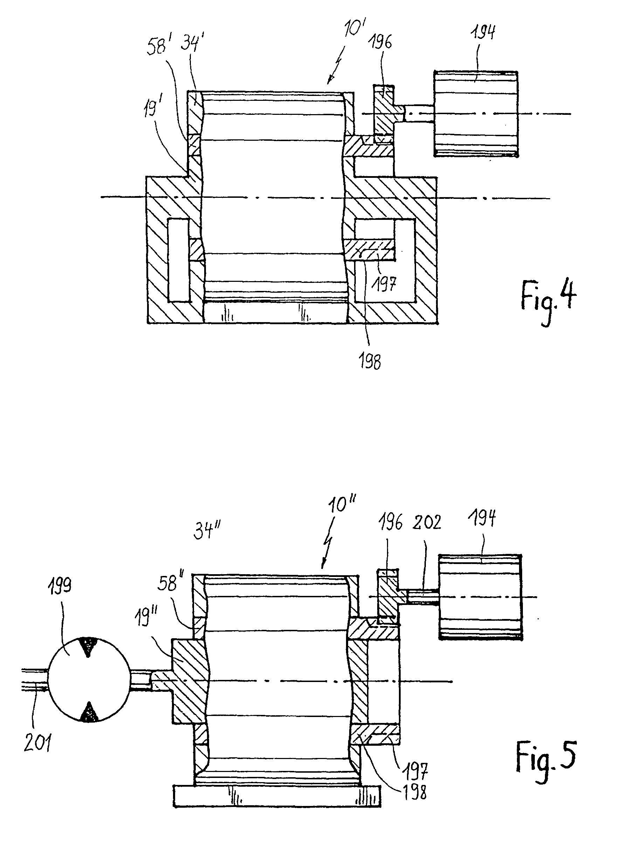

Ein Hydraulikventil 10' mit den anhand der Figuren 1 bis 3 beispielhaft erläuterten Funktionsstellungen und Wege-Verknüpfungen ist auch, wie in der Fig. 4 schematisch vereinfacht dargestellt, in der Weise realisierbar, daß das Gehäuse 34' des Ventils 10' fest mit dessen Kolben 19' verbunden ist und die Zwischenhülse 58' relativ zu der durch den Kolben 19' und das Gehäuse 34' gebildete Baueinheit drehbar angeordnet ist.

Als Stellantrieb für die Hülse 58' ist dann z. B. ein Elektromotor 194 mit umkehrbarer Drehrichtung geeignet, der ein Ritzel 196 antreibt, das mit einer Außenzahnung 197 eines aus dem Gehäuse 34' herausragenden Endabschnitts 198 der Zwischenhülse 58' kämmt.

Diese Art der Ansteuerung ist auch bei dem in der Fig. 5 dargestellten Drehschieber-Ventil 10'' vorgesehen, bei dem sowohl die Zwischenhülse 58'' als auch der zentrale Kolben 19'' relativ zueinander und zum Gehäuse 34'' drehbar gestaltet ist. Dieses Drehschieberventil 10'' ist als Nachlauf-Regelventil ausgebildet, das z. B. zur Antriebssteuerung eines Rotations-Hydromotors 199 einsetzbar ist, dessen Abtriebswelle 201 drehfest oder über ein nicht dargestelltes schlupffreies Getriebe, z. B. ein spielfreies Zahnradgetiebe mit dem Kolben 19'' rotatorisch bewegungsgekoppelt ist, der als "mechanisches" Rückmeldeelement für die jeweilige azimutale Position der Abtriebswelle 201 des Hydromotors 199 ausgenutzt ist. Die Sollwert-Vorgabe für diese Position erfolgt durch den Antrieb der Zwischenhülse 58'' mittels des das Ritzel 196 antreibenden Elektromotors 194, der in diesem Falle zweckmäßigerweise als digital, z. B. durch eine Folge elektrischer Impulse ansteuerbar ist, wobei jedem dieser Impulse eine Drehung des Ritzels 196 um einen definierten, inkrementalen Drehwinkel Δ ϕ entspricht, mit dem auch ein inkrementaler Drehwinkel δ ϕ der Motorwelle 201 des Hydromotors 199 verknüpft ist. Das Verhältnis δ ϕ/Δ ϕ ist hierbei durch die Getriebe-Übersetzungen bestimmt, mit denen die rotatorischen Bewegungen der Abtriebswelle 202 des Antriebs-Steuermotors 194 auf die Zwischenhülse 58'' übertragen und die Drehungen der Abtriebswelle 201 des gesteuerten Hydromotors 199 ggf. auf den Kolben 19'' des Nachlaufregelventils 10'' zurückgemeldet werden.

Es versteht sich, daß ein als Drehschieberventil ausgebildetes Nachlaufregelventil der anhand der Fig. 5 geschilderten Art auch in der Weise realisiert sein könnte, daß die Positions-Sollwert-Vorgabe für das antriebs-gesteuerte Element durch elektrisch gesteuerten Antrieb des Ventilkolbens und die Positions-Istwert-Rückmeldung durch rotatorische Kopplung des antriebs-gesteuerten Elements mit der Zwischenhülse des Nachlauf-Regelventils erfolgen.

Insbesondere bei den anhand der Fig. 4 und 5 erläuterten Ausführungsbeispielen von Ventilen 10' und 10'', bei denen die Zwischenhülse 58' bzw. 58'' beweglich angeordnet ist, ist es zweckmäßig, daß die unter dem hohen Ausgangsdruck des Druckversorgungsaggregats 29 stehenden P-Durchtrittskanäle 169₁ und 169₃ des zentralen Ringflanschsegments 52 des Kolbens sowie die P-Durchtrittskanäle 176 und 177 des B-Trennflanschsegments 54 innerhalb dieser Segmente 53 und 54 geschlossen berandet sind, so daß im Bereich des zentralen Ringflanschsegments 52 sowie im Bereich des B-Trennflanschsegments 54 eine durch den Druck bedingte Radialkraft auf die Zwischenhülse 58' bzw 58''vermieden wird, die die Tendenz hätte, die diese Ringflanschsegmente 52 und 54 des Kolbens 19 umgebenden Ringflanschelemente 65 und 67 der Zwischenhülse aufzuweiten und zu einer Schwergängigkeit der Zwischenhülse insgesamt beizutragen. Diese Reduktion der tendenziell aufweitend und damit reibungserhöhend auf die Hülse wirkenden Kräfte ist dank der Segmentbauweise des Kolbens 19 auf einfache Weise möglich, die somit auch in funktioneller Hinsicht den Vorteil einer hohen Funktionszuverlässigkeit vermittelt.

## Patentansprüche

1. Hydraulik-Ventil (10), bei dem durch Relativ-Bewegungen eines Kolbens (19) zu einem Gehäuse (34), das in räumlich definierter Konfiguration P- und T-Anschlüsse (11,12) für den Zu- und Rücklauf von Druckmedium von und zu einem Druckversorgungsaggregat (29) sowie A- und B-Verbraucheranschlüsse (13,14) hat, über die das Druckmedium vom Druckversorgungsaggregat (29) zum Verbraucher (18) und von diesem zurück zum Ventil strömen kann, definiert verschiedene Funktionsstellungen einstellbar sind, in denen definiert verschiedene Kombinationen von Strömungswegen, freigegeben, abgesperrt oder Unter-Kombinationen solcher Wege jeweils freigegeben und andere abgesperrt sind, wobei miteinander kommunizierende oder gegeneinander abgesperrte Abschnitte solcher Wege durch Nuten des Gehäuses (34) und/oder des Kolbens (19) sowie solche Nuten untereinander und/oder mit Versorgungoder Verbraucheranschlüssen verbindende Kanäle des Gehäuses und/oder des Kolbens in der Weise gebildet sind, daß
a das Gehäuse (34) aus planparallelen, plattenförmigen Segmenten (36 bis 46) zusammengesetzt ist, bei denen
a.1 Abschnitte von Längskanälen (96,97) durch Ausnehmungen geschlossen berandeten Querschnitts gebildet sind, die mit entsprechenden Kanalabschnitten des benachbarten Segments in positiver Überlappung stehen oder fluchten,
a.2 radiale Kanäle oder Abschnitte solcher Kanäle, die mit einem Versorgungsanschluß (11,12) oder einem Verbraucheranschluß (13,14) in kommunizierender Verbindung stehen, durch radiale Ausbuchtungen (86 bis 89) zentraler Öffnungen (75,77,79 und 81) von Gehäusesegmenten (38,40,42 und 44) gebildet sind und
a.3 den Querschnitt eines zentralen Gehäusekanals (71), innerhalb dessen der Ventilkolben (19) druckdicht axial verschiebbar und/oder rotatorisch auslenkbar ist, erweiternde Nuten (91,92,93 und 94) durch mit dem zentralen Kanal (71) in positiver Querschnittsüberlappung stehende Ausnehmungen (75,77,79 und 81) größeren Durchmessers der Gehäusesegmente (38,40,42 und 44) gebildet sind, des weiteren
b die Segmentplatten (36 bis 46) durch Hartlöten stoffschlüssig miteinander verbunden sind und die Segmentplatten (36 bis 46) für den Lötvorgang kraft-formschlüssig und/oder stoffschlüssig zu einem formhaltigen Paket vereinigt sind,
**dadurch gekennzeichnet, daß** zur Aufnahme von Lotmaterial dienende, geschlossene Aufnahmekanäle vorgesehen sind, die durch gruppenweise aneinander anschließende Ausnehmungen (121 bis 124, 126) der Segmentplatten (37 bis 45) gebildet sind und sich über die gesamte Spaltfugenfolge der Segmentplatten (36 bis 46) erstrecken.

2. Hydraulikventil nach Anspruch 1, **dadurch gekennzeichnet, daß** die Aufnahmekanäle für Lotmaterial sich zwischen den Endplatten (36 und 46) des Pakets über dessen gesamte Länge erstrecken.

3. Hydraulikventil nach Anspruch 1 oder 2, **dadurch gekennzeichnet, daß** die Aufnahmekanäle sich über Abschnitte der Paketlänge erstrecken, die in positiver Überlappung miteinander stehen oder durch nur ein Segment gegeneinander abgesetzt sind.

4. Hydraulikventil nach einem der Ansprüche 1 bis 3, **dadurch gekennzeichnet, daß** die Aufnahmekanäle axialsymmetrisch bezüglich der zentralen Längsachse (73) des zentralen Kanals (71) des Gehäuses (34) angeordnet sind.

5. Hydraulikventil nach einem der Ansprüche 1 bis 4, **dadurch gekennzeichnet, daß** das Segmentplatten-Paket (36 bis 46) für den Lötvorgang durch Fixierungsstäbe (116 bis 119) zusammengehalten ist, die sich zwischen den End-Segmenten (36 und 46) des Segment-Pakets erstrecken und miteinander fluchtende Ausnehmungen (108) der plattenförmigen Segmente (36 bis 46) durchsetzen.

6. Hydraulikventil nach Anspruch 5, **dadurch gekennzeichnet**, das als Fixierungselemente stabförmige Zuganker vorgesehen sind, die mindestens an einer Seite des Pakets mit der dortigen Endstirnplatte (36 oder 46) vernietet sind.

7. Hydraulikventil nach Anspruch 6, **dadurch gekennzeichnet, daß** die Fixierungsstäbe (116 bis 119) mit jeweils beiden Endstirnplatten (36 und 46) vernietet sind.

8. Hydraulikventil nach Anspruch 6 oder Anspruch 7, **dadurch gekennzeichnet, daß** der Durchmesser der Fixierungsstäbe (116 bis 119) dem Durchmesser der Ausnehmungen (108) der Gehäusesegmente (36 bis 46) entspricht.

9. Hydraulikventil nach einem der Ansprüche 1 bis 8, **dadurch gekennzeichnet, daß** das Segmentplattenpaket (36 bis 46) des Gehäuses (34) durch Verstemmen in miteinander fluchtende randoffene Ausnehmungen der plattenförmigen Segmente (36 bis 46) eingelegter Verankerungskörper mit den plattenförmigen Segmenten kraft-formschlüssig zusammengehalten ist.

10. Hydraulikventil nach Anspruch 9, **dadurch gekennzeichnet, daß** die randoffenen Ausnehmungen in miteinander fluchtender Anordnung eine Längsnut mit sich nach außen verjüngendem, trapezförmigem lichtem Querschnitt bilden, in die ein flach gewölbter Verankerungskörper einlegbar ist, der durch Einpressen in die Nut die kraft-formschlüssige Verankerung der plattenförmigen Segmente (36 bis 46) vermittelt.

11. Hydraulikventil nach einem der Ansprüche 1 bis 10, **dadurch gekennzeichnet, daß** die plattenförmigen Segmente (36 bis 46) des Gehäuses (34) durch mindestens eine äußere Schweißnaht miteinander stoffschlüssig verbunden sind.

12. Hydraulikventil nach einem der Ansprüche 1 bis 11, **dadurch gekennzeichnet, daß** mindestens einige der plattenförmigen Segmente (36 bis 46), die einander benachbart angeordnet sind, mit koaxialen Vorsprüngen und Vertiefungen etwa komplementärer Gestaltung versehen und durch Eindrücken der Vorsprünge in die Vertiefungen der benachbarten Segmentplatten kraftschlüssig aneinander fixierbar sind.

13. Hydraulikventil nach Anspruch 12, **dadurch gekennzeichnet, daß** die Vorsprünge durch die Butzen von ausgestanzten Vertiefungen gebildet sind, bei denen der Stanzhub nur über einen Teil, vorzugsweise den überwiegenden Teil der Materialdicke der jeweiligen Segmentplatte geführt ist.

14. Hydraulikventil nach einem der Ansprüche 1 bis 13, **dadurch gekennzeichnet, daß** die Dicke plattenförmiger Segmente (38, 40, 42, 44) des Gehäuses (34) bei denen der Rand ihrer zentralen Ausnehmung (75, 77, 79, 81) den Nutgrund einer den zentralen Kanal (71) des Gehäuses (34) erweiternden Nut (91, 92, 93, 94) bildet, dem axialen Abstand der die Nutwangen bildenden Segmentplatten (37, 39, 41, 43, 45) oder einem natürlichen Bruch dieses Abstandes entspricht und/oder, daß die Dicke von Plattensegmenten (39, 41, 43), die Nutwangen zweier durch einen Ringflansch gegeneinander abgegrenzter Gehäuse-Ringnuten (91, 92, 93, 94) bilden, der Dicke des jeweiligen Ringflansches oder einem natürlichen Bruch derselben entspricht.

15. Hydraulikventil nach Anspruch 14, **dadurch gekennzeichnet, daß** die plattenförmigen Segmente (36 bis 46) des Ventilgehäuses (34) dieselbe Dicke haben oder aus Segment-Elementen derselben Dicke zusammengesetzt sind.

16. Hydraulikventil nach einem der Ansprüche 1 bis 15, **dadurch gekennzeichnet, daß** der Ventilkolben (19) aus hart miteinander verlöteten, der Grundform nach kreisscheibenförmigen Segmentplatten (48 bis 56) besteht.

17. Hydraulikventil nach einem der Ansprüche 1 bis 16, **dadurch gekennzeichnet, daß** eine in den zentralen Kanal (71) des Gehäuses (34) eingesetzte Zwischenhülse (58) vorgesehen ist, die den Kolben (19) koaxial umschließt und ihrerseits aus ringscheibenförmigen, hart miteinander verlöteten Segmenten (61 bis 69) gleichen Innendurchmessers dᵢ besteht.

18. Hydraulikventil nach Anspruch 17, **dadurch gekennzeichnet, daß** die Zwischenhülse (58) fest mit dem Gehäuse (34) des Ventils verbunden ist und der Kolben (19) in der Zwischenhülse (58) beweglich angeordnet ist.

19. Hydraulikventil nach Anspruch 17, **dadurch gekennzeichnet, daß** die Zwischenhülse (58) fest mit dem Kolben (19) des Ventils (10) verbunden ist, und daß die durch die Zwischenhülse (58) und den Kolben (19) gebildete Einheit insgesamt relativ zum Gehäuse (34) des Ventils (10) beweglich ist.

20. Hydraulikventil nach Anspruch 17, **dadurch gekennzeichnet, daß** der Kolben (19) des Ventils (10) fest mit dessen Gehäuse (34) verbunden ist, und daß die Zwischenhülse (58) beweglich angeordnet ist.

21. Hydraulikventil nach Anspruch 17, **dadurch gekennzeichnet, daß** sowohl der Kolben (19) als auch die Zwischenhülse (58) relativ zum Gehäuse (34) wie auch gegeneinander beweglich sind.

22. Hydraulikventil nach Anspruch 21, **gekennzeichnet durch** seine Ausbildung als Nachlauf-Regelventil, bei dem der Kolben (19) als Sollwert-Vorgabe-Element und die Zwischenhülse (58) als Istwert-Rückmelde-Element genutzt sind, oder die Hülse als Sollwert-Vorgabe-Elementund der Kolben als Istwert-Rückmelde-Element genutzt sind.

23. Hydraulikventil nach einem der Ansprüche 1 bis 22, **gekennzeichnet durch** seine Ausbildung als Drehschieberventil.

## Claims

1. Hydraulic valve (10), in which by relative movement between a piston (19) and a housing (34), which in a spatially defined configuration has P- and T-connections (11, 12) for the supply and return flow of pressure medium from and to a pressure supply aggregate (29) as well as A- and B-user connections (13, 14), via which the pressure medium can flow from the pressure supply aggregate (29) to the user (18) and from this back to the valve, various defined functional positions can be set, in which defined varying combinations of flow paths are opened, blocked or sub-combinations of such paths respectively are opened and others blocked off, wherein segments of such paths communicating with each other or blocked off against each other are formed by grooves of the housing (34) and/or the piston (19) as well as such grooves among themselves and/or with supply- or user- connection connecting channels of the housing and/or the piston in such a way that
a. the housing (34) is assembled from planar parallel, plate-shaped segments (36 through 46), in which
a.1 segments of longitudinal channels (96, 97) are formed of clearances of closed-edged cross-section, which are in positive overlap or alignment with corresponding channel segments of the adjacent segments,
a.2 radial channels or segments of such channels, which are in communication connection with a supply connection (11, 12) or a user connection (13, 14), are formed by radial bulges (86-98) of the central openings (75, 77, 79 and 81) of the housing segments (38, 40, 42 and 44) and
a.3 grooves (91, 92, 93 and 94) increasing the cross-section of a central housing channel (71), within which the valve piston (19) is pressure-tight axially slideable and/or rotationally displaceable, are formed by clearances (75, 77, 79 and 81) of the housing segments (38, 40, 42 and 44) which positively overlap the central channel (71) in cross-section and which have a larger diameter than this, and further
b. the segment plates (36 through 46) are materially joined with each other by brazing and the segment plates (36 through 46) for the soldering process are positively form-fittingly locked and/or materially combined to form a dimensionally stable package,
**characterized in that** closed receptacle channels for recieving therein brazing material are provided, which are formed by series-wise interconnected clearances (121 through 124, 126) of the segment plates (37 through 45) and which extend through the cumulative series of joints of the segment plates (36 through 46).

2. Hydraulic valve according to Claim 1, **characterized in that** the receptacle channels for brazing material extend along the entire length between the end plates (36 and 46) of the package.

3. Hydraulic valve according to Claim 1 or 2, **characterized in that** the receptacle channels extend along segments of the packet length, which are in positive overlap with each other or interrupted with respect to each other by only one segment.

4. Hydraulic valve according to one of Claims 1 through 3, **characterized in that** the receptacle channels are provided axially symmetrically with respect to the central longitudinal axis (73) of the central channel (71) of the housing (34).

5. Hydraulic valve according to one of Claims 1 through 4, **characterized in that** for the brazing process the segment plate-package (36 through 46) is held together by fixing elements (116 through 119), which extend between the end segments (36 and 46) of the segment package and extend through clearances (108) of the plate-shaped segments (36 through 46), which clearances (108) are in alignment with each other.

6. Hydraulic valve according to Claim 5, **characterized in that** rod-shaped tension posts are provided as fixing elements, which at least on one side of the packet are riveted with the corresponding end face plate (36 or 46).

7. Hydraulic valve according to Claim 6, **characterized in that** the fixing posts (116 through 119) are respectively riveted to both end plates (36 and 46).

8. Hydraulic valve according to Claim 6 or Claim 7, **characterized in that** the diameter of the fixing posts (116 through 119) corresponds to the diameter of the alignment clearances (108) of the housing segments (36 through 46).

9. Hydraulic valve according to one of Claims 1 through 8, **characterized in that** the segment plate package (36 through 46) of the housing (34) is positively form-fittingly held together by caulking anchoring bodies introduced in open-edged recesses of the plate shaped segments (36 through 46), the recesses being aligned with each other.

10. Hydraulic valve according to Claim 9, **characterized in that** the open-edged recesses form, when arranged aligned with each other, a longitudinal groove having a trapezoid cross section that narrows outwardly, into which a slightly barrelled anchoring body is introduceable, which, by being pressed into the groove, produces the positive form-fitting anchoring of the plate-shaped segments (36 through 46).

11. Hydraulic valve according to one of Claims 1 through 10, **characterized in that** the plate-shaped segments (36 through 46) of the housing (34) are materially joined with each other by at least one outer weld bead.

12. Hydraulic valve according to one of Claims 1 through 11, **characterized in that** at least some of the plate-shaped segments (36 through 46), which are provided adjacent to each other, are provided with coaxial projections and recesses of approximately complimentary shape and are frictionally lockable to each other by pressing in of the projections into the recesses of the adjacent segment plate.

13. Hydraulic valve according to Claim 12, **characterized in that** the projections are formed by the material from stamped recesses, in which the stamping stroke extends only through a part, preferably the larger part, of the material thickness of the respective segment plate.

14. Hydraulic valve according to one of preceding Claims 1 through 13, **characterized in that** the thickness of plate-shaped segments (38, 40, 42, 44) of the housing (34), in which the edge of their central clearances (75, 77, 79, 81) forms the groove base of a groove (91, 92, 93, 94) widening the central channel (71) of the housing (34), corresponds to the axial separation of the segment plates (37, 39, 41, 43, 45) which form the groove side walls or to a natural fraction of this separation, and/or that the thickness of plate segments (39, 41, 43), which form the groove side walls of two housing ring grooves (91, 92, 93, 94) separated from each other by a ring flange, corresponds to the thickness of the respective ring flanges or a natural fraction thereof.

15. Hydraulic valve according to Claim 14, **characterized in that** the plate-shaped segments (36 through 46) of the valve housing (34) have the same thickness or are assembled of segment elements of the same thickness.

16. Hydraulic valve according to one of Claims 1 through 15, **characterized in that** the valve piston (19) is comprised of brazed-together segment plates (48 through 56) having a circular disk-like base shape.

17. Hydraulic valve according to one of Claims 1 through 16, **characterized in that** an intermediate sleeve (58) introduced into the central channel (71) of the housing (34) is provided, which co-axially encompasses the piston (19) and which itself is comprised of ring disk-shaped, brazed-together segments (61 through 69) having equal inner diameters dᵢ.

18. Hydraulic valve according to Claim 17, **characterized in that** the intermediate sleeve (58) is connected rigedly to the housing (34) of the valve and that the piston (19) is disposed moveably in the intermediate sleeve (58).

19. Hydraulic valve according to Claim 17, **characterized in that** the intermediate sleeve (58) is rigedly connected to the piston (19) of the valve (10) and that the unit formed by the intermediate sleeve (58) and the piston (19) is moveable relative to the housing (34) of the valve (10).

20. Hydraulic valve according to Claim 17, **characterized in that** the piston (19) of the valve (10) is rigedly connected to the housing (34) and that the intermediate sleeve (58) is disposed such that it is moveable.

21. Hydraulic valve according to Claim 17, **characterized in that** both the piston (19) and the intermediate sleeve (58) are moveable relative to the housing (34) as well as with respect to each other.

22. Hydraulic valve according to Claim 21, **characterized by** it being formed to be a servo control valve, in which the piston (19) is used as a set-value setting element and in which the intermediate sleeve (58) is used as a set-value responding element, or in which the sleeve is used as a set-value setting element and in which the piston is used as a set-value responding element.

23. Hydraulic valve according to one of Claims 1 to 22, **characterized by** it being formed to be a rotary slide valve.

## Revendications

1. Vanne hydraulique (10) dans laquelle des mouvements relatifs d'un piston (19) par rapport à une cage ou un carter (34), qui comporte des raccords P et T (11, 12) disposés dans l'espace selon une configuration définie pour permettre la circulation aller et retour de fluide sous pression en provenance et à destination d'un générateur de pression (29), ainsi que des raccords de consommateurs A et B (13, 14) par le biais desquels le fluide sous pression peut circuler du générateur de pression (29) au consommateur (18) et revenir vers la vanne, permettent de sélectionner de façon définie différentes positions de fonctionnement dans lesquelles différentes combinaisons de voies de circulation sont ouvertes ou fermées de façon définie ou différentes sous-combinaisons de ces voies sont ouvertes tandis que d'autres sont fermées, sachant que des tronçons de ces voies qui communiquent entre eux ou qui sont fermés les uns par rapport aux autres sont formés par des gorges de la cage ou du carter (34) et/ou du piston (19) et que des canaux du carter et/ou du piston qui relient ces gorges entre elles et/ou aux raccords de consommateurs ou d'alimentation sont eux aussi formés, telle que
a la cage ou le carter (34) est composé(e) de segments (36 à 46) en forme de plaquettes, à faces planes et parallèles, dont
a. 1 des tronçons de canaux longitudinaux (96, 97) sont formés par des évidements de section transversale à bord fermé, qui chevauchent positivement des tronçons de canaux du segment adjacent ou qui sont alignement avec ceux-ci,
a.2 les canaux radiaux ou les tronçons de ces canaux qui communiquent avec un raccord de consommateur (13, 14) sont constitués par des encoches radiales (86 à 89) d'ouvertures centrales (75, 77, 79 et 81) de segments de cage (38, 40, 42 et 44), et a.3 les gorges (91, 92, 93 et 94) agrandissant la section transversale d'un canal de cage ou de carter central (71), à l'intérieur duquel le piston de vanne (19) peut coulisser axialement et/ou tourner en conservant la pression, sont formées par des évidements (75, 77, 79 et 81) de diamètre supérieur des segments de cage (38, 40, 42 et 44), dont la section transversale chevauche positivement le canal central (71),
b. et que les plaquettes (36 à 46) sont assemblées par brasage fort avec fusion ou adhérence des matières et les plaquettes (36 à 46) sont réunies pour le brasage par adhérence et engagement positif et/ou par fusion de la matière en un bloc constitué,
**caractérisé en ce que** des canaux de réception fermés destinés à recevoir la brasure sont prévus, qui sont formés par des évidements (121 à 124, 126) des plaquettes (37 à 45) se succédant par groupes et s'étendent sur toute la succession de fentes de séparation des plaquettes (36 à 46).

2. Vanne hydraulique selon la revendication 1, **caractérisée en ce que** les canaux de réception pour la brasure s'étendent entre les plaquettes d'extrémité (36 et 46) du bloc, sur toute la longueur de celui-ci.

3. Vanne hydraulique selon la revendication 1 ou 2, **caractérisée en ce que** les canaux de réception s'étendent sur les tronçons de la longueur du bloc qui se chevauchent positivement ou sont décalés les uns par rapport aux autres d'un seul segment.

4. Vanne hydraulique selon l'une des revendications 1 à 3, **caractérisée en ce que** les canaux de réception sont disposés de façon symétrique par rapport à l'axe longitudinal central (73) du canal central (71) de la cage (34).

5. Vanne hydraulique selon l'une des revendications 1 à 4, **caractérisée en ce que** le bloc de plaquettes (36 à 46) est assemblé pour le brasage par des.tiges de fixation (116 à 119) qui s'étendent entre les segments d'extrémité (36 et 46) du bloc de plaquettes et qui traversent des évidements (108) en alignement des segments en forme de plaquettes (36 à 46).

6. Vanne hydraulique selon la revendication 5, **caractérisée en ce que** des tirants d'ancrage en forme de tige sont prévus en tant qu'éléments de fixation, qui sont rivés sur au moins un côté du bloc à la plaquette frontale d'extrémité (36 ou 46).

7. Vanne hydraulique selon la revendication 6, **caractérisée en ce que** les tiges de fixation (116 à 119) sont chaque fois rivées aux deux plaquettes frontales d'extrémité (36 et 46).

8. Vanne hydraulique selon la revendication 6 ou 7, **caractérisée en ce que** le diamètre des tiges de fixation (116 à 119) correspond au diamètre des évidements (108) des segments (36 à 46) de la cage.

9. Vanne hydraulique selon l'une des revendications 1 à 8, **caractérisée en ce que** le bloc de plaquettes (36 à 46) de la cage (34) est maintenu assemblé par adhérence et par engagement positif avec les segments en forme de plaquettes en matant des corps d'ancrage logés dans des évidements à bord ouvert alignés entre eux des segments en forme de plaquettes (36 à 46).

10. Vanne hydraulique selon la revendication 9, **caractérisée en ce que** les évidements à bord ouvert alignés entre eux forment une gorge longitudinale dont la section transversale trapézoïdale se rétrécit vers l'extérieur, dans laquelle peut être inséré un corps d'ancrage bombé à petit rayon de carre qui réalise l'ancrage par adhérence et par engagement positif des segments en forme de plaquettes (36 à 46) lorsqu'il est enfoncé dans la gorge.

11. Vanne hydraulique selon l'une des revendications 1 à 10, **caractérisée en ce que** les segments en forme de plaquettes (36 à 46) de la cage (34) sont reliés entre eux par fusion de la matière par au moins un cordon de soudure extérieur.

12. Vanne hydraulique selon Tune des revendications 1 à 11, **caractérisée en ce qu'**au moins quelques-uns des segments en forme de plaquettes (36 à 46) qui sont adjacents les uns aux autres sont munis de saillies et d'encoches de forme complémentaire et peuvent être fixés les uns aux autres par adhérence en enfonçant les saillies dans les encoches des plaquettes voisines.

13. Vanne hydraulique selon la revendication 12, **caractérisée en ce que** les saillies sont constituées par les bouchons de renfoncements découpés à la presse, dans le cas desquels le poinçon n'a découpé la plaquette que sur une partie de son épaisseur, de préférence sur la majeure partie de son épaisseur.

14. Vanne hydraulique selon Tune des revendications 1 à 13, **caractérisée en ce que** l'épaisseur de segments en forme de plaquettes (38, 40, 42, 44) de la cage (34), dont le bord de l'évidement central (75, 77, 79, 81) forme le fond dune gorge agrandissant le canal central (71) de la cage (34), correspond à l'écart axial qui les sépare des plaquettes (37, 39, 41, 43, 45) formant les parois de la gorge ou à une interruption naturelle de cet écart et/ou **en ce que** l'épaisseur de plaquettes (39, 41, 43) formant les parois de deux gorges annulaires (91, 92, 93, 94) de la cage délimitées par une bride annulaire correspond à l'épaisseur de chaque bride annulaire ou à une interruption naturelle de celles-ci.

15. Vanne hydraulique selon la revendication 14, **caractérisée en ce que** les segments en forme de plaquettes (36 à 46) de la cage de vanne (34) ont la même épaisseur ou sont composés d'éléments de segment de même épaisseur.

16. Vanne hydraulique selon Tune des revendications 1 à 15, **caractérisée en ce que** le piston (19) de la vanne est composé de plaquettes (48 à 56) assemblées entre elles par brasage fort qui ont la forme de disques, conformément à la forme de base.

17. Vanne hydraulique selon Tune des revendications 1 à 16, **caractérisée en ce qu'**un cylindre intermédiaire (58) logé dans le canal central (71) de la cage (34) est prévu, qui entoure coaxialement le piston (19) et qui est, lui aussi, composé de segments en forme de disque (61 à 69) ayant tous un diamètre extérieur dᵢ identique et assemblés par brasage fort.

18. Vanne hydraulique selon la revendication 17, **caractérisée en ce que** le cylindre intermédiaire (58) est relié fixement à la cage (34) de la vanne et **en ce que** le piston (19) est mobile dans le cylindre intermédiaire (58).

19. Vanne hydraulique selon la revendication 17, **caractérisée en ce que** le cylindre intermédiaire (58) est relié fixement au piston (19) de la vanne (10), et **en ce que** l'unité formée par le cylindre intermédiaire (58) et le piston (19) est mobile globalement par rapport à la cage (34) de la vanne (10).

20. Vanne hydraulique selon la revendication 17, **caractérisée en ce que** le piston (19) de la vanne (10) est relié fixement à la cage (34) de cette dernière, et **en ce que** le cylindre intermédiaire (58) est mobile.

21. Vanne hydraulique selon la revendication 17, **caractérisée en ce qu'**à la fois le piston (19) et le cylindre intermédiaire (58) sont mobiles tant par rapport à la cage (34) que l'un par rapport à l'autre.

22. Vanne hydraulique selon la revendication 21, **caractérisée par** sa réalisation en tant que vanne de régulation par poursuite dont le piston (19) est utilisé en tant qu'élément donnant la valeur de consigne et le cylindre intermédiaire (58), en tant qu'élément indiquant la valeur réelle, ou dont le cylindre est utilisé comme élément donnant la valeur de consigne et le piston, comme élément indiquant la valeur réelle.

23. Vanne hydraulique selon Tune des revendications 1 à 22, **caractérisée par** sa réalisation en tant que vanne rotative.
